# EUROPEAN PATENT SPECIFICATION

(11) **EP 4 339 785 B1**
(45) Date of publication and mention of the grant of the patent: **09.12.2026**
(21) Application number: 22863240.2
(22) Date of filing: 23.08.2022
(51) Int. Cl.: G06N 10/40, G06N 10/70, G06F 11/22

(54) **QUANTUM MEASUREMENT AND CONTROL SYSTEM AND QUANTUM COMPUTER**
QUANTENMESSUNGS- UND STEUERUNGSSYSTEM UND QUANTENCOMPUTER
SYSTÈME DE MESURE ET DE COMMANDE QUANTIQUES ET ORDINATEUR QUANTIQUE

(30) Priority: 31.08.2021 CN 202111011308; 31.08.2021 CN 202111012148; 31.08.2021 CN 202111012174
(43) Date of publication of application: 20.03.2024
(73) Proprietor: Origin Quantum Computing Technology (Hefei) Co., Ltd, Hefei, Anhui 230088 (CN)
(72) Inventor: KONG, Weicheng, Hefei, Anhui 230088 (CN); ZHAO, Yongjie, Hefei, Anhui 230088 (CN)
(74) Representative: Bardehle Pagenberg Partnerschaft mbB Patentanwälte Rechtsanwälte
(86) International application number: PCT/CN2022/114316
(87) International publication number: WO 2023/030101

(56) References cited:
- CN-A- 109 217 939
- CN-A- 109 613 876
- CN-A- 109 800 882
- CN-A- 112 926 741
- CN-A- 113 010 302
- CN-A- 113 011 591
- US-A1- 2015 304 048
- XIANG LIANG ET AL: "Simultaneous Feedback and Feedforward Control and Its Application to Realize a Random Walk on the Bloch Sphere in an Xmon-Superconducting-Qubit System", vol. 14, no. 1, 31 July 2020 (2020-07-31), pages 14099-1 - 14099-14, XP055918821, Retrieved from the Internet <URL:https://journals.aps.org/prapplied/pdf/10.1103/PhysRevApplied.14.014099> DOI: 10.1103/PhysRevApplied.14.014099
- LIN JIN ET AL: "Scalable and customizable arbitrary waveform generator for superconducting quantum computing", AIP ADVANCES, AMERICAN INSTITUTE OF PHYSICS, 2 HUNTINGTON QUADRANGLE, MELVILLE, NY 11747, vol. 9, no. 11, 18 November 2019 (2019-11-18), XP012242264, DOI: 10.1063/1.5120299
- FU X ET AL: "An Experimental Microarchitecture for a Superconducting Quantum Processor", 2017 50TH ANNUAL IEEE/ACM INTERNATIONAL SYMPOSIUM ON MICROARCHITECTURE (MICRO), ACM, 14 October 2017 (2017-10-14), pages 813 - 825, XP033536682
- WANG? ZHAN? ET AL: "Hardware for multi-superconducting qubit control and readout**Project supported by the State Key Development Program for Basic Research of China (Grants Nos. 2017YFA0304300 and 2016YFA0300600), the Natural Science Foundation of Beijing, China (Grant No. Z190012), the Key-Area Research and Developmen", CHINESE PHYSICS B, CHINESE PHYSICS B, BRISTOL GB, vol. 30, no. 11, 24 May 2021 (2021-05-24), XP020467134, ISSN: 1674-1056, [retrieved on 20210524], DOI: 10.1088/1674-1056/AC0425
- YANG YUCHEN ET AL: "An FPGA-Based Low Latency AWG for Superconducting Quantum Computers", 2021 IEEE INTERNATIONAL INSTRUMENTATION AND MEASUREMENT TECHNOLOGY CONFERENCE (I2MTC), IEEE, 17 May 2021 (2021-05-17), pages 1 - 6, XP033934666, DOI: 10.1109/I2MTC50364.2021.9460084

## Description

The present application claims the priority of the Chinese patent application No. 202111011308.2 filed with the China National Intellectual Property Administration on August 31, 2021 and entitled "quantum measurement and control system and quantum computer", the priority of the Chinese patent application No. 202111012148.3 filed with the China National Intellectual Property Administration on August 31, 2021 and entitled "signal generating apparatus, measurement and control system and quantum computer", and the priority of the Chinese patent application No. 202111012174.6 filed with the China National Intellectual Property Administration on August 31, 2021 and entitled "signal acquisition apparatus, measurement and control system and quantum computer".

### TECHNICAL FIELD

The disclosure relates to the technical field of quantum measurement and control, and in particular to a quantum measurement and control system and a quantum computer.

### BACKGROUND

Quantum chip is an unit for performing computing operations in quantum computing, which is composed of qubits. In order to guarantee the operation of qubits and get the data of operation results, it is necessary to provide an operation control instruction and an operation result measurement signal for the qubits. Correspondingly, it is necessary to provide, on the quantum chip, an operation control instruction line for the qubits, such as an XY line and a Z line for a superconducting qubit, and a qubit measurement bus for reading quantum state information of the qubits. In order to guarantee the integration and operation of the quantum chip, an reasonable and commonly used quantum chip structure is as follows: multiple qubits are provided on the quantum chip; each of the qubits is configured with an operation control instruction line, and a qubit measurement bus is configured for the qubits according to a spatial layout of the qubits, wherein one qubit measurement bus is usually responsible for the measurement of the quantum state information of multiple qubits, for example, more than five qubits.

In existing apparatus, when testing a plurality of qubits connected with one qubit measurement bus, it is necessary to determine the measurement time and measurement waveform for each of the qubits before the testing is executed, and superimpose a plurality of measurement waveforms on an upper computer to obtain a final measurement waveform, and send the superimposed measurement waveform to a measurement and control device to test the qubits. Obviously, in existing schemes, during the measurement of some qubits on the qubit measurement bus, other qubits on this qubit measurement bus cannot be measured, and a next measurement task can only be carried out after a previous measurement task is finished, which is not conducive to the separate measurement or on-demand measurement of qubits connected with the qubit measurement bus, and thus greatly reduces the utilization rate of qubits on the quantum chip.

Liang Xiang et al.: "Simultaneous Feedback and Feedforward Control and Its Application to Realize a Random Walk on the Bloch Sphere in an Xmon-Superconducting-Qubit System", Physical Review Applied, vol. 14, no. 1, 31 July 2020 (2020-07-31), page 14099, XP05591 8821, describes that measurement-based feedback control is central in quantum computing and precise quantum control. This document provides a fast and flexible field-programmable-gate-array-based feedback control in an Xmon-superconducting-qubit system. The latency of room-temperature electronics is custom-optimized to be as short as 140 ns. Projective measurement of a signal qubit produces a feedback tag to implement a conditional pulse gate on the qubit. In a feedforward process, the measurement-based feedback tag is brought to a different target qubit for conditional control. In a two-qubit experiment, the feedback and feedforward controls are simultaneously implemented in consecutive steps. A quantum number is then generated by the signal qubit, and a random walk of the target qubit is correspondingly triggered and realized on the Bloch sphere. The experiment of this document provides a conceptually simple and intuitive benchmark for feedback control in a multiqubit system. The feedback system can be further scaled up for more-complex feedback-control experiments.

### SUMMARY

The present invention is defined in independent claim 1. Further embodiments of the invention are defined in the dependent claims.

The object of the present application is to provide a quantum measurement and control system and a quantum computer, so as to solve the problem of low utilization rate of qubits on a quantum chip in the prior art, and the quantum measurement and control system and the quantum computer can achieve the separate measurement or on-demand measurement of qubits connected with a qubit measurement bus, and improve the utilization rate of qubits on the quantum chip.

In an aspect, the present application provides a quantum measurement and control system, including: a first signal output module, configured to generate waveforms to be processed corresponding to qubits connected with a qubit measurement bus based on a preset time sequence and process the waveforms to be processed into one synthesized waveform, and output a qubit reading signal corresponding to the synthesized waveform to the qubit measurement bus, wherein the preset time sequence is determined according to an execution time and a measurement time of a quantum computing task to be executed, a waveform to be processed for a qubit includes a measurement waveform when the qubit needs to be measured or an empty waveform when the qubit does not need to be measured; a signal acquisition module, configured to acquire and process a qubit reading feedback signal output by the qubit measurement bus based on the preset time sequence, to obtain quantum state information of each qubit which needs to be measured; and a control module, configured to output a synchronous trigger signal as a start time of the preset time sequence to the first signal output module and the signal acquisition module, wherein the first signal output module is further configured to update the waveforms to be processed for the qubits according to a first preset time; the first preset time is determined according to a working clock frequency of the first signal output module.

In a possible implementation, the first signal output module includes: a waveform output unit, configured to generate the waveforms to be processed corresponding to the qubits connected with the qubit measurement bus based on the preset time sequence and process the waveforms to be processed into the synthesized waveform; and a DAC unit, connected with the waveform output unit, and configured to receive the synthesized waveform and output the qubit reading signal corresponding to the synthesized waveform to the qubit measurement bus.

In a possible implementation, the waveform output unit includes: a plurality of waveform generating units, any one of which is configured to generate a waveform to be processed for a qubit; and a waveform synthesizing unit, connected with the plurality of waveform generating units and configured to process the waveforms to be processed output by the plurality of waveform generating units into the synthesized waveform.

In a possible implementation, the plurality of waveform generating units are configured to generate the waveforms to be processed for the qubits connected with the qubit measurement bus based on the preset time sequence and output the waveforms to be processed.

In a possible implementation, the DAC unit includes at least one output channel, any one of which is configured to output one qubit reading signal to one qubit measurement bus on a quantum chip.

In a possible implementation, the signal acquisition module includes: an ADC unit, configured to acquire and process the qubit reading feedback signal output by the qubit measurement bus to obtain a first digital signal, wherein the first digital signal carries quantum state information of measured qubits connected with the qubit measurement bus; and a data processing unit, connected with the ADC unit and configured to receive and process the first digital signal based on the preset time sequence to obtain the quantum state information of the measured qubits.

In a possible implementation, the data processing unit includes: a data distributor, configured to receive and process the first digital signal to obtain a plurality of pieces of first data and output the plurality of pieces of first data; wherein, the plurality of pieces of first data and a plurality of qubits connected with the qubit measurement bus are in one-to-one correspondence; and a plurality of operators, connected with the data distributor, wherein each of the plurality of operators is configured to receive and process one of the plurality of pieces of first data and output quantum state information of one measured qubit.

In a possible implementation, each of the operators is specifically configured to receive and process one of the plurality of pieces of first data based on the preset time sequence, and output the quantum state information of one measured qubit.

In a possible implementation, the ADC unit includes at least one acquisition channel, any one of which is configured to acquire a qubit reading feedback signal output by a qubit measurement bus.

The preset time sequence is determined according to an execution time and a measurement time of a quantum computing task to be executed.

In a possible implementation, the quantum measurement and control system further includes a task management module, which is configured to receive the execution time and measurement time of the quantum computing task to be executed and output the corresponding preset time sequence.

In a possible implementation, the quantum measurement and control system further includes a second signal output module, which is configured to output control signals to a plurality of qubits connected with the qubit measurement bus based on the preset time sequence, and wherein the control signals are configured to regulate the quantum state information of the qubits.

In a possible implementation, the first signal output module and the signal acquisition module are located on a same board card.

Another aspect of the present application provides a quantum measurement and control system, which is configured for measurement of qubits connected with at least one qubit measurement bus on a quantum chip; wherein the measurement of the qubits includes applying a qubit reading signal to the qubits, and acquiring from the qubits and processing a qubit reading feedback signal after a preset delay; the quantum measurement and control system includes: a qubit measurement determining module, configured to determine first information on whether each of qubits connected with a qubit measurement bus needs to be measured at a current time; a first signal output module, configured to: according to the first information, generate measurement waveforms corresponding to qubits which need to be measured and process the measurement waveforms into a synthesized waveform, and output a qubit reading signal corresponding to the synthesized waveform to the qubit measurement bus; a signal acquisition module, configured to acquire and process a qubit reading feedback signal output by the qubit measurement bus based on the first information and the preset delay, to obtain quantum state information of each qubit which needs to be measured; a control module, configured to output a synchronous trigger signal for determining the preset delay to the first signal output module and the signal acquisition module.

In a possible implementation, the first signal output module is further configured to update the measurement waveforms for the qubits according to a first preset time; the first preset time is determined according to a working clock frequency of the first signal output module.

In a possible implementation, the first signal output module includes: a waveform output unit, configured to generate the measurement waveforms corresponding to the qubits which need to be measured according to the first information and process the measurement waveforms into the synthesized waveform; and a DAC unit, connected with the waveform output unit, and configured to receive the synthesized waveform and output the qubit reading signal corresponding to the synthesized waveform to the qubit measurement bus.

In a possible implementation, the waveform output unit includes: a plurality of waveform generating units, any one of which is configured to generate a measurement waveform for a qubit; and a waveform synthesizing unit, connected with the plurality of waveform generating units and configured to process the measurement waveforms output by the plurality of waveform generating units into the synthesized waveform.

In a possible implementation, the plurality of waveform generating units are configured to generate the measurement waveforms corresponding to the qubits which need to be measured according to the first information.

In a possible implementation, the signal acquisition module includes: an ADC unit, configured to acquire and process the qubit reading feedback signal output by the qubit measurement bus to obtain a first digital signal; wherein the first digital signal carries quantum state information of measured qubits connected with the qubit measurement bus; a data processing unit, connected with the ADC unit, and configured to receive and process the first digital signal based on the first information and the preset delay to obtain the quantum state information of the measured qubits.

In a possible implementation, the data processing unit includes: a data distributor, configured to receive and process the first digital signal to obtain a plurality of pieces of first data and output the plurality of pieces of first data; wherein, the plurality of pieces of first data and a plurality of qubits connected with the qubit measurement bus are in one-to-one correspondence; and a plurality of operators, connected with the data distributor, wherein each of the plurality of operators is configured to receive and process one of the plurality of pieces of first data and output quantum state information of one measured qubit.

In a possible implementation, each of the plurality of operators is specifically configured to receive and process one of the plurality of pieces of the first data based on the first information and the preset delay, and output quantum state information of one measured qubit.

In a possible implementation, the qubit measurement determining module includes: a quantum computing task receiving module, configured to receive a quantum computing task; a quantum computing task analyzing module, configured to analyze the quantum computing task and determine a task execution time and a measurement time of a qubit; and a measurement determining module, configured to determine the first information on whether each of qubits connected with the qubit measurement bus needs to be measured at the current time, based on the execution time and the measurement time.

Another aspect of the present application provides a quantum computer including a quantum chip and the quantum measurement and control system; wherein, the quantum chip is provided with at least one group of qubits, each group of qubits is connected with one qubit measurement bus; an input end of each qubit measurement bus is connected with the first signal output module, and an output end of each qubit measurement bus is connected with the signal acquisition module.

Another aspect of the present application provides a signal generating apparatus, which is configured to output a qubit reading signal to a qubit measurement bus on a quantum chip, wherein the qubit reading signal is configured to read quantum state information of a plurality of qubits connected with the qubit measurement bus; the signal generating apparatus includes: a plurality of waveform output modules, each of which is configured to output a measurement waveform or an empty waveform corresponding to a qubit; a waveform processing module, connected with the plurality of waveform output modules, and configured to receive and process measurement waveforms or empty waveforms output by the waveform output modules to obtain a synthesized waveform, and output the synthesized waveform; and a digital-to-analog conversion module, connected with the waveform processing module, and configured to receive and process the synthesized waveform to obtain the qubit reading signal corresponding to the synthesized waveform, and output the qubit reading signal.

For the signal generating apparatus, in a possible implementation, the waveform output module includes: a waveform memory unit, configured to store the measurement waveform or the empty waveform; a memory reading unit, connected with the waveform memory unit, and configured to read the measurement waveform or the empty waveform in the waveform memory unit in response to a second control signal and output the measurement waveform or the empty waveform to the waveform processing module; and an output control unit, connected with the memory reading unit and configured to output the second control signal according to a preset time sequence.

For the signal generating apparatus, in a possible implementation, the output control unit is further configured to receive a synchronous trigger signal corresponding to a qubit, and output the second control signal according to the synchronous trigger signal and the preset time sequence.

For the signal generating apparatus, in a possible implementation, the second control signal includes a start signal and a stop signal, and the output control unit includes: a first array parametron, configured to output a first time parameter and a second time parameter corresponding to the preset time sequence in response to the synchronous trigger signal; and a first timer, connected with the first array parametron, and configured to start timing in response to the synchronous trigger signal until the first time parameter and the second time parameter, send the start signal to the memory reading unit in response to the first time parameter, and send the stop signal to the memory reading unit in response to the second time parameter.

For the signal generating apparatus, in a possible implementation, the waveform processing module is an adder unit.

For the signal generating apparatus, in a possible implementation, the signal generating apparatus further includes: a first data buffer module, wherein an input end of the first data buffer module is connected with an output end of the waveform processing module, and an output end of the first data buffer module is connected with the digital-to-analog conversion module; the first data buffer module is configured to receive and store the synthesized waveform; the digital-to-analog conversion module is configured to read from the first data buffer module and process the synthesized waveform to obtain the qubit reading signal corresponding to the synthesized waveform and output the qubit reading signal.

For the signal generating apparatus, in a possible implementation, the plurality of waveform output modules, the waveform processing module and the digital-to-analog conversion module are located on a same board card.

For the signal generating apparatus, in a possible implementation, the signal generating apparatus further includes a first clock module, provided on the board card and configured to provide a clock parameter for the plurality of waveform output modules.

Another aspect of the present application provides a method for generating a qubit reading signal, including: generating several measurement waveforms and/or empty waveforms based on received synchronous trigger signals corresponding to qubits; receiving and processing the measurement waveforms and/or empty waveforms to obtain a synthesized waveform; and receiving and processing the synthesized waveform to obtain a corresponding qubit reading signal to be output to a quantum chip.

Another aspect of the present application provides a quantum measurement and control system, which includes the signal generating apparatus, or is configured for generating a qubit reading signal using the method for generating a qubit reading signal and outputting the qubit reading signal to a quantum chip.

Another aspect of the present application provides a quantum computer including the quantum measurement and control system and a quantum chip; wherein the quantum chip is provided with a plurality of qubit measurement buses, each of which is connected with a plurality of qubits.

Another aspect of the present application provides a signal acquisition apparatus, including: an analog-to-digital conversion module, connected with an output end of a qubit measurement bus, and configured to receive and process a qubit reading feedback signal to obtain a first digital signal, wherein the qubit reading feedback signal carries quantum state information of a plurality of qubits connected with the qubit measurement bus; a signal distribution module, connected with the analog-to-digital conversion module, and configured to receive and process the first digital signal to obtain a plurality of pieces of first data, and output the plurality of pieces of first data, wherein the plurality of pieces of first data and the plurality of qubits connected with the qubit measurement bus are in one-to-one correspondence; and a plurality of acquired data processing modules, which are connected with the signal distribution module, and each of which is configured to receive a synchronous trigger signal corresponding to a qubit, process first data of the qubit corresponding to the synchronous trigger signal, and output quantum state information of the corresponding qubit; wherein the number of the acquired data processing modules is equal to the number of the qubits connected with the qubit measurement bus.

For the signal acquisition apparatus, in a possible implementation, each of the acquired data processing modules includes: an acquisition control unit, configured to output a third control signal according to a preset time sequence in response to the synchronous trigger signal; a processing coefficient reading unit, connected with the acquisition control unit, and configured to output a processing coefficient in response to the third control signal; and a data processing unit, connected with the acquisition control unit and the processing coefficient reading unit, and configured to process the first data according to the processing coefficient in response to the third control signal, and output the quantum state information of the corresponding qubit obtained by processing.

For the signal acquisition apparatus, in a possible implementation, the third control signal includes a second start signal and a second stop signal, and the acquisition control unit includes: a second array parametron, configured to output a third time parameter and a fourth time parameter corresponding to the preset time sequence in response to the synchronous trigger signal and; and a second timer, connected with the second array parametron, and configured to start timing in response to the synchronous trigger signal until the third time parameter and the fourth time parameter, send a second start signal to the processing coefficient reading unit and the data processing unit in response to the third time parameter, and send a second stop signal to the processing coefficient reading unit and the data processing unit in response to the fourth time parameter.

For the signal acquisition apparatus, in a possible implementation, the processing coefficient reading unit includes: a processing coefficient memory, configured to store a preset processing coefficient; and a controller, configured to read and output the processing coefficient to the data processing unit in response to the second start signal, and stop reading in response to the second stop signal.

For the signal acquisition apparatus, in a possible implementation, the data processing unit includes an operator, configured to process the first data according to the processing coefficient in response to the second start signal, and stop operation in response to the second stop signal and output an operation result; wherein the operation result is the quantum state information of the corresponding qubit.

For the signal acquisition apparatus, in a possible implementation, the signal acquisition apparatus further includes a second data buffer module, wherein an input end of the second data buffer module is connected with an output end of the analog-to-digital conversion module, and an output end of the second data buffer module is connected with the signal distribution module; the second data buffer module is configured to receive and store the first digital signal; the signal distribution module is configured to receive from the second data buffer module and process the first digital signal to obtain a plurality of pieces of first data, and output the plurality of pieces of first data.

For the signal acquisition apparatus, in a possible implementation, the analog-to-digital conversion module, the signal distribution module and the plurality of acquired data processing modules are located on a same board card.

For the signal acquisition apparatus, in a possible implementation, the signal acquisition apparatus further includes a second clock module, provided on the board card and configured to provide a clock parameter for the plurality of acquired data processing modules.

Another aspect of the present application provides a method for processing a qubit reading feedback signal, including: receiving and processing a qubit reading feedback signal output from an output end of a qubit measurement bus to obtain a first digital signal, wherein the qubit reading feedback signal carries quantum state information of a plurality of qubits connected with the qubit measurement bus; receiving and processing the first digital signal to obtain a plurality of pieces of first data, and outputting the plurality of pieces of first data, wherein the plurality of pieces of first data and the plurality of qubits connected with the qubit measurement bus are in one-to-one correspondence; and receiving a synchronous trigger signal corresponding to a qubit, processing first data of the qubit corresponding to the synchronous trigger signal, and outputting quantum state information of the corresponding qubit, wherein the number of the acquired data processing modules is equal to the number of the qubits connected with the qubit measurement bus.

Another aspect of the present application provides a quantum measurement and control system, which includes the signal acquisition apparatus, or is configured for processing a qubit reading feedback signal output by a quantum chip using the method for processing a qubit reading feedback signal.

Another aspect of the present application provides a quantum computer including the quantum measurement and control system and a quantum chip, wherein the quantum chip is provided with a plurality of qubit measurement buses, each of which is connected with a plurality of qubits.

Another aspect of the present application provides a computer storage medium having computer programs stored therein, wherein the computer programs, when executed by a processor, cause an implementation of any one of the method for generating a qubit reading signal and/or the method for acquiring a qubit reading signal.

Compared with the prior art, the quantum measurement and control system provided by the present application is provided with a first signal output module, which is configured to generate waveforms to be processed corresponding to qubits connected with a qubit measurement bus based on a preset time sequence and process the waveforms to be processed into a synthesized waveform, and output a qubit reading signal corresponding to the synthesized waveform to the qubit measurement bus; wherein a waveform to be processed for a qubit includes a measurement waveform when the qubit needs to be measured or an empty waveform when the qubit does not need to be measured; and a signal acquisition module, which is configured to acquire and process a qubit reading feedback signal output by the qubit measurement bus based on the preset time sequence, to obtain quantum state information of each qubit which needs to be measured, so as to achieve the separate measurement or on-demand measurement of a plurality of qubits connected with the qubit measurement bus; and a control module, which is configured to output a synchronous trigger signal as a start time of the preset time sequence to the first signal output module and the signal acquisition module, so that the accuracy of the separate measurement or on-demand measurement of the quantum state information of the qubits is improved, and the utilization rate of qubits on a quantum chip is improved.

### BRIEF DESCRIPTION OF THE DRAWINGS

In order to more clearly describe the technical solutions of the embodiments of the present application and the prior art, accompanying drawings that need to be used in the embodiments and the prior art will be briefly described below. Obviously, accompanying drawings described below are for only some of embodiments of the present application. Those skilled in the art can also obtain other drawings based on these accompanying drawings without any creative efforts.
Fig. 1 is a structural circuit diagram of a quantum chip provided by an embodiment of the present application;
Fig. 2 is a structural composition diagram of a quantum measurement and control system provided by an embodiment of the present application;
Fig. 3 is a structural composition diagram of a first signal module provided by an embodiment of the present application;
Fig. 4 is a structural composition diagram of a waveform output unit provided by an embodiment of the present application;
Fig. 5 is a connection diagram charactering a DAC output channel provided by an embodiment of the present application;
Fig. 6 is a structural composition diagram of a signal acquisition module provided by an embodiment of the present application;
Fig. 7 is a structural composition diagram of a data processing unit provided by an embodiment of the present application;
Fig. 8 is a connection diagram charactering an ADC output channel provided by an embodiment of the present application;
Fig. 9 is a structural composition diagram of a quantum measurement and control system including a second signal module provided by an embodiment of the present application;
Fig. 10 is a structural composition diagram of a quantum measurement and control system including a task management module provided by an embodiment of the present application;
Fig. 11 is a structural composition diagram of another quantum measurement and control system provided by an embodiment of the present application;
Fig. 12 is a structural composition diagram of another quantum measurement and control system including a first signal module provided by an embodiment of the present application;
Fig. 13 is a structural composition diagram of another quantum measurement and control system including a signal acquisition module provided by an embodiment of the present application;
Fig. 14 is a structural composition diagram of a qubit measurement determining module provided by an embodiment of the present application;
Fig. 15 is a structural composition diagram of a signal generating apparatus provided by an embodiment of the present application;
Fig. 16 is a structural composition diagram of a waveform output module provided by an embodiment of the present application;
Fig. 17 is a structural composition diagram of a signal generating apparatus including a data buffer module provided by an embodiment of the present application;
Fig. 18 is a flowchart of a method for generating a qubit reading signal provided by an embodiment of the present application;
Fig. 19 is a structural composition diagram of a signal acquisition apparatus provided by an embodiment of the present application;
Fig. 20 is a structural composition diagram of an acquired data processing module provided by an embodiment of the present application;
Fig. 21 is a structural composition diagram of an acquisition control unit provided by an embodiment of the present application;
Fig. 22 is a structural composition diagram of a processing coefficient reading unit provided by an embodiment of the present application;
Fig. 23 is a structural composition diagram of a data processing unit provided by an embodiment of the present application;
Fig. 24 is a structural composition diagram of a signal acquisition apparatus including a data buffer module provided by an embodiment of the present application;
Fig. 25 is a flowchart of a method for processing a qubit reading feedback signal provided by an embodiment of the present application.

Description of reference numerals: 1-quantum chip, 11-qubit measurement bus, 12-qubit, 13-resonant cavity, 111-input end, 112-output end, 2-first signal output module, 21-waveform output unit, 22-DAC unit, 211-waveform generating unit, 212-waveform synthesizing unit, 3-signal acquisition module, 31-ADC unit, 32-data processing unit, 321- data distributor, 322-operator, 4-control module, 5-second signal output module, 6-task management module, 7-qubit measurement determining module, 71-quantum computing task receiving module, 72-quantum computing task analyzing module, 73-measurement determining module, 8-signal generating apparatus, 81-waveform output module, 82-waveform processing module, 83-digital-to-analog conversion module, 84-data buffer module, 811-waveform memory unit, 812-memory reading unit, 813-output control unit, 9-signal acquisition apparatus, 91-acquired data processing module, 92-signal distribution module, 93-analog-to-digital conversion module, 94-data buffer module, 911-acquisition control unit, 912-processing coefficient reading unit, 913-data processing unit, 9111-second array parametron, 9112-second timer, 9121-controller, 9122-processing coefficient memory, 9131-operator.

### DETAILED DESCRIPTION

In order to make the technical solutions of the present application more understandable for those skilled in the art, the technical solutions in embodiments of the present application will be described clearly and completely in combination with accompanying drawings. Obviously, the described embodiments are only some, and not all, of the embodiments of the present application. All other embodiments obtained based on the embodiments of the present application by those skilled in the art without any creative efforts fall into the scope of protection of the present application. The embodiments described below with reference to accompanying drawings are exemplary and are only for the purpose of explaining the present application, and should not be interpreted as limitations on the present application.

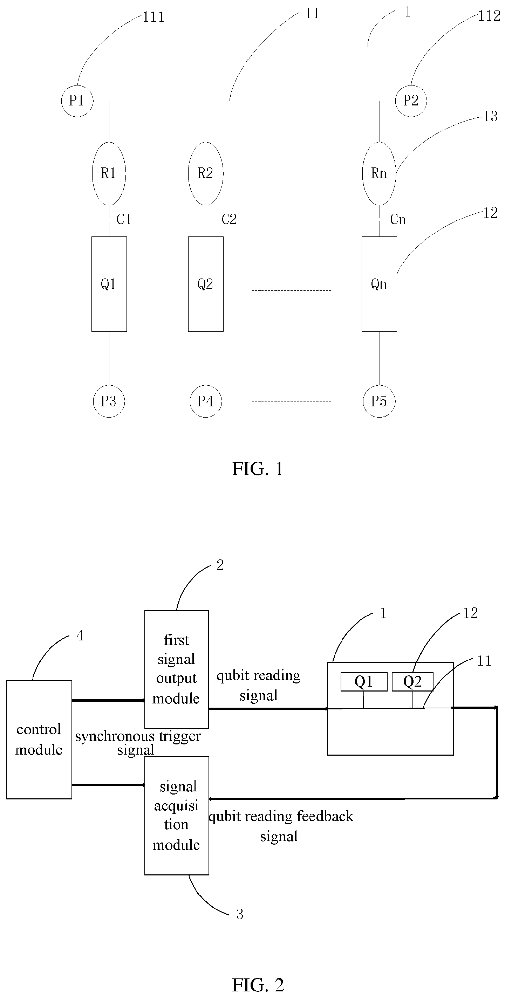

As shown in Fig. 1, a quantum chip 1 includes a plurality of qubits 12 and resonant cavities 13 which are in one-to-one correspondence and coupled with each other. One end of each resonant cavity 13 away from a qubit 12 corresponding thereof is connected with a qubit measurement bus 11. An input end 111 of the qubit measurement bus 11 is used for receiving a qubit reading signal, and an output end 112 of the qubit measurement bus 11 is used for outputting a qubit reading feedback signal corresponding to the qubit reading signal, so as to measure quantum state information of the plurality of qubits 12 connected with the qubit measurement bus 11.

During the execution of quantum computing, it is common that a plurality of qubits 12 connected with a single qubit measurement bus 11 are assigned to perform different quantum computing tasks, and the time for finishing these tasks depends on the quantum computing tasks themselves. Correspondingly, the measurement of quantum states of qubits for performing different quantum computing tasks is quite random, that is to say, for qubits connected with one qubit measurement bus 11 for performing different quantum computing tasks, since the time for executing the tasks is different, the time required to measure the quantum states of these qubits is also different. How to measure qubits at different measuring times of the respective qubits is a great challenge to the existing quantum measurement and control system (i.e., quantum control system).

Specifically, in the existing quantum measurement and control system, with respect to requirements of a measurement task for a plurality of qubits 12 connected with a single qubit measurement bus 11, an upper computer obtains the qubits involved in the measurement task in advance, and superimposes and synthesizes measurement waveforms corresponding to all the qubits 12 connected with the qubit measurement bus 11 to obtain an overall measurement waveform, and then stores the overall measurement waveform in the quantum measurement and control system. When an quantum calculation is executed, the pre-stored overall measurement waveform is triggered as needed to realize the measurement of all the qubits 12 connected with the qubit measurement bus 11. In the existing process as a whole, the upper computer determines the waveform for measurement (i.e. the overall measurement waveform) and sends the waveform for measurement to the measurement and control system, and the measurement and control system outputs a signal based on the waveform for measurement as needed. The transmission flow of measurement information in the whole process is "upper computer - measurement and control system - qubit measurement bus - qubits on the quantum chip". Because the above-mentioned waveform for measurement is obtained by obtaining in advance and superimposing the measurement waveforms for all the qubits 12 through the upper computer and is stored in the quantum measurement and control system in advance, the quantum measurement and control system cannot adjust the waveform for measurement in time according to the changes of quantum computing tasks, which is not conducive to the flexible measurement of qubits. At the same time, in the use of a quantum computer, it is shown that a next measurement task can be carried out only after a previous measurement task is finished, which greatly reduces the utilization rate of qubits on the quantum chip and the execution efficiency of quantum computing.

In view of above, the present application proposes a quantum measurement and control system. As shown in Fig. 2, the quantum measurement and control system provided by an embodiment of the present application includes a first signal output module 2, a signal acquisition module 3 and a control module 4.

Specifically, the first signal output module 2 is configured to generate waveforms to be processed corresponding to qubits 12 connected with a qubit measurement bus 11 based on a preset time sequence and process the waveforms to be processed into one synthesized waveform, and output a qubit reading signal corresponding to the synthesized waveform to the qubit measurement bus 11; wherein a waveform to be processed for a qubit includes a measurement waveform when the qubit 12 needs to be measured or an empty waveform when the qubit 12 does not need to be measured. The signal acquisition module 3 is configured to acquire and process a qubit reading feedback signal output by the qubit measurement bus 11 based on the preset time sequence, to obtain quantum state information of each qubit 12 which needs to be measured. The control module 4 is configured to output a synchronous trigger signal as a start time of the preset time sequence to the first signal output module 2 and the signal acquisition module 3.

In the quantum measurement and control system provided by the present application, by the first signal output module 2, the waveforms to be processed corresponding to qubits 12 connected with a qubit measurement bus 11 are generated and processed into one synthesized waveform, and a qubit reading signal corresponding to the synthesized waveform is output to the qubit measurement bus 11. By generating the waveforms to be processed corresponding to qubits 12 connected with a qubit measurement bus 11 and processing the waveforms to be processed into one synthesized waveform, outputting the qubit reading signal corresponding to the synthesized waveform to the qubit measurement bus 11, and acquiring and processing the qubit reading feedback signal output by the qubit measurement bus 11, the quantum state information of each qubit 12 which needs to be measured is obtained, wherein a waveform to be processed for a qubit includes a measurement waveform when the qubit 12 needs to be measured or an empty waveform when the qubit 12 does not need to be measured.

During the execution of a quantum computing task by the measurement and control system, the measurement and control system internally determines the synthesized waveform, that is, determines the waveform to be processed as the measurement waveform or as the empty waveform depending on whether the qubit 12 needs to be measured. Specifically, when the qubit 12 needs to be measured, the waveform to be processed is determined as the measurement waveform, and when the qubit 12 does not need to be measured, the waveform to be processed is determined as the empty waveform. Whether the qubit 12 needs to be measured is determined by the quantum computing task itself.

Therefore, the quantum measurement and control system can flexibly operate according to the quantum computing task, that is, can flexibly determine the waveform to be processed for each qubit as the measurement waveform or as the empty waveform according to the quantum computing task, and can realize the flexible measurement of qubits. At the same time, by determining the synthesized waveform within the quantum measurement and control system, the transmission flow of measurement information during the execution of quantum calculating is shortened from "upper computer - measurement and control system - qubit measurement bus - qubits on the quantum chip" to "measurement and control system - qubit measurement bus - qubits on the quantum chip", which greatly improves the overall operation efficiency of the quantum computer. Combined with the flexible measurement architecture of qubits, it is not necessary to wait until the previous measurement task is finished before starting the next measurement task, and the synthesized waveform can be flexibly changed in the quantum measurement and control system according to the quantum computing task, realizing the on-demand measurement of each qubit, which can jointly improve the utilization efficiency of quantum chip resources.

It should be noted that measuring the qubits 12 connected with the qubit measurement bus 11 includes two steps: applying the qubit reading signal to the qubits and acquire the qubit reading feedback signal fed back from the qubits. In order to guarantee the measuring effect of qubits, when measuring a qubit, the receiving time of the qubit reading signal at the input end of the qubit measurement bus 11 and the acquiring time of the qubit reading feedback signal at the output end of the qubit measurement bus 11 need to have a relatively stable time relationship. This relatively stable time relationship is an empirical value determined according to the performance of the hardware device of the quantum computer, which will not repeated here, and is set in the preset time sequence. For specific embodiments, please refer to embodiments in the preset time sequence section below.

In order to guarantee the above-mentioned relatively stable time relationship, it is necessary to provide a working synchronous trigger signal to the first signal output module 2 and the signal acquisition module 3. Therefore, the measurement and control system of the present application is provided with a control module 4 configured to output the synchronous trigger signal as the start time of the preset time sequence to the first signal output module 2 and the signal acquisition module 3.

It should be noted that, in the measurement of qubits in each quantum computing task, the receiving time of the qubit reading signal at the input end of the qubit measurement bus 11 and the acquiring time of the qubit reading feedback signal at the output end of the qubit measurement bus 11 have a relatively stable time relationship, which can be regarded as an event time sequence with correlation in terms of the preset time sequence.

In the present application, the preset time sequence, based on which the control module 4 outputs the synchronous trigger signal as the start time of the preset time sequence to the first signal output module and the signal acquisition module, is the start time of the above-mentioned event time sequence.

The event time sequences corresponding to respective quantum computing task can take a certain time in the event time sequence for a certain quantum computing task as the start time. The preset time sequence is formed by superposing the event time sequences corresponding to respective quantum computing tasks according to the actual situation of the event time sequences corresponding to respective quantum computing tasks, and the preset time sequence can also be called an overall time sequence. That is to say, any time can be taken as the start time of the event time sequence for a certain quantum computing task, and based on this start time, the event time sequences corresponding to respective quantum computing tasks can be superimposed to obtain the preset time sequence.

It should be noted that the above definition of event time sequence is used to distinguish it from the preset time sequence (i.e. the above overall time sequence) corresponding to respective quantum computing tasks, and the time sequence corresponding to the measurement for a certain quantum computing task, and does not constitute the limitation on the protection scope of the present application. In essence, the time sequence corresponding to the measurement for a certain quantum computing task is a part of the overall time sequence corresponding to respective quantum computing tasks. The first signal output module and the signal acquisition module in the present application can start working at the same time at the start time of the event time sequence for the measurement for a certain quantum computing task, for example, start working at the same time at the start time of the event time sequence of the first quantum computing task to be executed. For other subsequent quantum computing tasks, the work is started according to the event time sequence of each quantum computing task, that is, the first signal output module outputs a signal to update the waveform to be processed for the qubit corresponding to each quantum computing task according to the event time sequence of each quantum computing task.

At the same time, in order to guarantee the updating effect, the first signal output module 2 further updates the waveform to be processed for each qubit according to its own internal working clock characteristics. Specifically, the first signal output module 2 is further configured to update the waveforms to be processed for the qubits according to a first preset time. For example, the waveform to be processed for each qubit 12 can be updated every 5 seconds. Specifically, the first preset time is determined according to the working clock frequency of the first signal output module 2.

As can be seen from above, the first signal output module 2 is configured to generate the waveforms to be processed corresponding to qubits 12 connected to the qubit measurement bus **11** based on the preset time sequence and process the waveforms to be processed into one synthesized waveform, and output the qubit reading signal corresponding to the synthesized waveform to the qubit measurement bus 11. Wherein, the waveform to be processed for a qubit includes the measurement waveform when the qubit 12 needs to be measured or the empty waveform when the qubit 12 does not need to be measured. The preset time sequence is the superposition of respective event time sequences, and the result of the superposition shows that the waveform to be processed for each qubit 12 connected with the qubit measurement bus 11 is different at different times, and the specific difference is determined by the quantum computing task performed by each qubit 12 connected with the qubit measurement bus 11, that is, determined depending on whether each qubit 12 connected with the qubit measurement bus 11 needs to be measured. Specifically, when a quantum computing task executed by a qubit is finished and the qubit needs to be measured, the waveform to be processed corresponding to the qubit is the measurement waveform; and when the quantum computing task executed by a qubit has not been finished and the qubit does not need to be measured, the waveform to be processed corresponding to the qubit is the empty waveform.

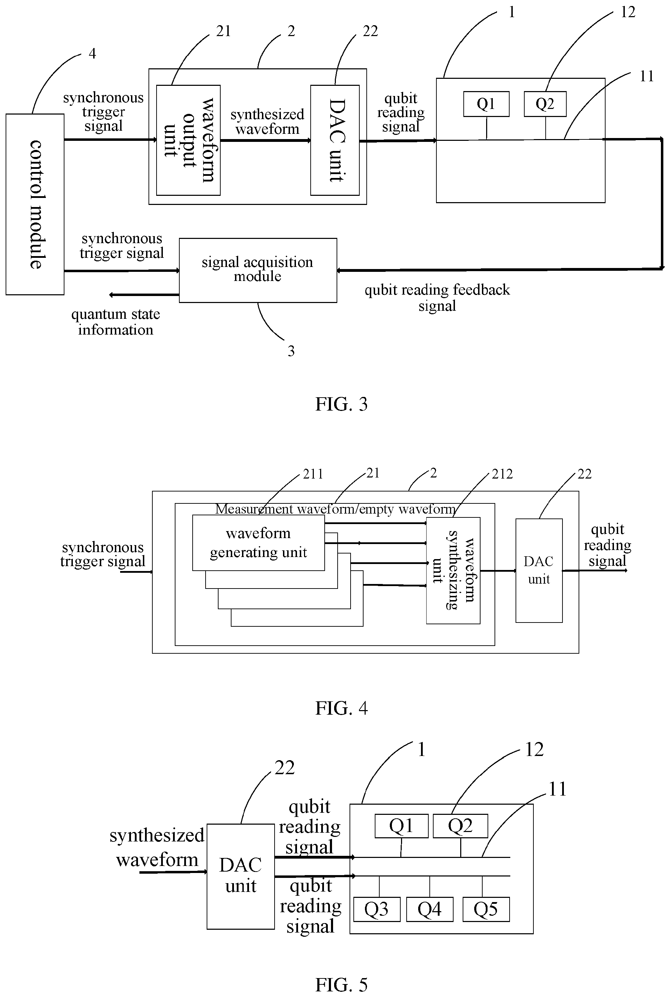

As a specific embodiment of the present application, as shown in Fig. 3, the first signal output module 2 in the present application includes a waveform output unit 21 and a DAC (digital-to-analog converter) unit 22 which are connected with each other.

The waveform output unit 21 is configured to generate the waveforms to be processed corresponding to the qubits 12 connected with the qubit measurement bus 11 based on the preset time sequence and process the waveforms to be processed into the synthesized waveform. The DAC unit 22 is configured to receive the synthesized waveform and output the qubit reading signal corresponding to the synthesized waveform to the input end of the qubit measurement bus 11.

Specifically, the qubit measurement bus 11 is connected with a plurality of qubits 12, and at a certain time, the plurality of qubits 12 are divided into those that need to be measured and/or those that do not need to be measured. For qubits 12 that need to be measured, the waveform output unit 21 internally provides respective measurement waveforms, and for qubits 12 that do not need to be measured, the waveform output unit 21 internally provides respective empty waveforms. The waveform output unit 21 internally synthesizes these measurement waveforms and/or empty waveforms into one synthesized waveform. The synthesized waveform can realize the formal measurement of all qubits 12 connected with the qubit measurement bus 11 at the current time, and in essence, the measurement of only qubits that need to be measured in all qubits 12 connected with the qubit measurement bus 11.

The DAC unit 22 is connected to the waveform output unit 21, and processes the synthesized waveform obtained after the synthesizing process into a specific analog signal, that is, the qubit reading signal, and transmits the qubit reading signal to the input end of the qubit measurement bus 11, so as to realize the measurement of qubits 12 connected with the qubit measurement bus 11.

Compared with determining the synthesized waveforms for measurement of all the qubits 12 connected with the qubit measurement bus 11 in the upper computer, in the present application, by determining the synthesized waveform for measurement of all the qubits 12 connected with the qubit measurement bus 11 within the first signal output module 2, the flexibility of qubit measurement is greatly improved, and the transmission flow of measurement information during the execution of quantum computing is shortened from "upper computer - measurement and control system - qubit measurement bus - qubits on the quantum chip" to "measurement and control system - qubit measurement bus - qubits on the quantum chip", and in combination of the flexible measurement architecture of qubits, the overall operating efficiency of the quantum computer is greatly improved.

In order for the waveform output unit 21 to internally provide respective measurement waveforms for qubits 12 that need to be measured and internally provide respective empty waveforms for qubits 12 that do not need to be measured, and synthesize these measurement waveforms and/or empty waveforms into one synthesized waveform, as shown in Fig. 4, for example, the waveform output unit 21 includes a plurality of waveform generating units 211 and a waveform synthesizing unit 212, as an implementation of the embodiment of the present application.

The plurality of waveform generating units 211 are configured to generate the waveforms to be processed for the qubits connected with the qubit measurement bus 11 based on the preset time sequence and output the waveforms to be processed, wherein, any of the waveform generating units 211 is configured to store and output a waveform to be processed for a qubit 12. The waveform synthesizing unit 212 is connected with the plurality of waveform generating units 211, and is configured to process the waveforms to be processed output by the plurality of waveform generating units 211 into the synthesized waveform.

Specifically, the number of waveform generating units 211 is equal to the number of qubits 12 connected with the qubit measurement bus 11, and the waveform generating units 211 and the qubits 12 are in one-to-one correspondence. Each waveform generating unit 211 stores a measurement waveform and an empty waveform or only stores a measurement waveform in its internal storage space, and outputs the measurement waveform or the empty waveform at the preset time sequence. Specifically, when the preset time sequence shows that the qubit 12 needs to be measured, the waveform generating unit 211 outputs the measurement waveform corresponding to the qubit; and when the preset time sequence shows that the qubit 12 does not need to be measured, the waveform generating unit 211 outputs the empty waveform.

In the present application, the waveform generating units 211 are provided within the first signal output module 2, wherein the waveform generating units 211 are in one-to-one correspondence with the qubits and configured to provide respective measurement waveforms when qubits need to be measured and provide respective empty waveforms when qubits do not need to be measured, and the waveform synthesizing unit 212 synthesizes the measurement waveforms and/or empty waveforms for all qubits 12 connected with the qubit measurement bus 11 into one synthesized waveform. The synthesized waveform is converted into an analog signal (i.e., the qubit reading signal) by the DAC unit 22. Then the formal measurement of all the qubits connected with the qubit measurement bus 11 is achieved through the qubit measurement bus 11, and in essence, the flexible on-demand measurement of qubits is achieved.

As shown in Fig. 5, for example, as an implementation of the embodiment of the present application, the DAC unit 22 includes at least one output channel, any one of which is configured to output one qubit reading signal to one qubit measurement bus 11 on a quantum chip 1. In the present application, the DAC unit 22 is used to output the qubit reading signal corresponding to the synthesized waveform to the input end of the qubit measurement bus 11 on the quantum chip 1. Specifically, the DAC unit 22 can have one or more output channels, each of which is connected to the input end of one qubit measurement bus 11 on the quantum chip 1. By selecting the DAC unit 22 with a plurality of output channels, each of which outputs one qubit reading signal to the input end of one qubit measurement bus 11 respectively, the measurement of qubits 12 connected with multiple qubit measurement buses 11 is realized, which facilitates the improvement of the measurement efficiency of qubits.

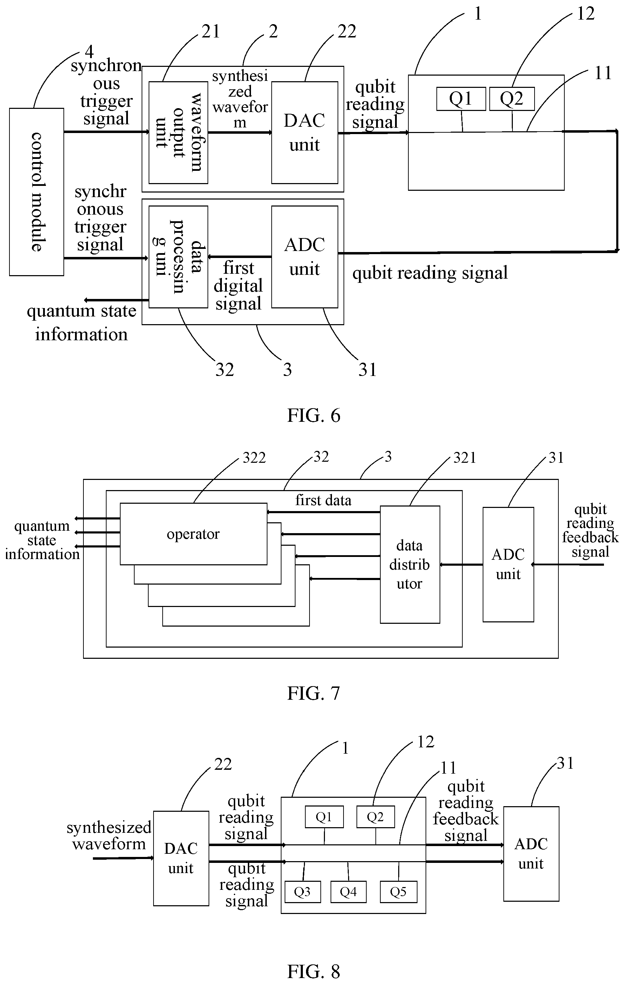

As shown in Fig. 6, for example, as an implementation of the embodiment of the present application, the signal acquisition module 3 includes: an ADC (analog-to-digital converter) unit 31 configured to acquire and process the qubit reading feedback signal output by the qubit measurement bus 11 to obtain a first digital signal, wherein the first digital signal carries quantum state information of measured qubits 12 connected to the qubit measurement bus 11; a data processing unit 32 connected with the ADC unit 31 and configured to receive and process the first digital signal based on the preset time sequence to obtain the quantum state information of the measured qubits 12.

Specifically, the qubit reading feedback signal output from the output end of the qubit measurement bus 11 is an analog signal carrying the quantum state information of a plurality of qubits 12 connected with the qubit measurement bus 11. In the present application, the ADC unit 31 is configured to acquire the qubit reading feedback signal carrying the quantum state information, and convert the signal into the first digital signal, which facilitates the obtaining of the quantum state information of measured qubits 12 through subsequent processing.

The first digital signal carries the quantum state information of a plurality of measured qubits 12. The data processing unit 32 is configured to connect with the ADC unit 31; receive and process the first digital signal obtained by the converting process to obtain a plurality of sub-signals, each of which characterizes the quantum state information of a measured qubit 12; and process the sub-signals to obtain specific quantum state information.

As shown in Fig. 7, for example, as an implementation of the embodiment of the present application, the data processing unit 32 includes: a data distributor 321 configured to receive and process the first digital signal to obtain a plurality of pieces of first data and output the plurality of pieces of first data, wherein, the plurality of pieces of first data and a plurality of qubits connected with the qubit measurement bus 11 are in one-to-one correspondence; and a plurality of operators 322 connected with the data distributor 321, wherein each of the plurality of operators 322 is configured to receive and process one of the plurality of pieces of first data and output quantum state information of one measured qubit 12.

Specifically, the first digital signal output by the ADC unit 31 and received by the data processing unit 32 contains the quantum state information of the plurality of qubits 12. The data distributor 321 is configured to receive the first digital signal, and divide the first digital signal into plurality of pieces of first data according to the measured qubits 12, and each of the plurality of pieces of first data characterizes the quantum state information of one measured qubit 12. The plurality of operators 322 are configured to be connected with the data distributor 321, and each of the plurality of operator 322 receives and processes one of the plurality of pieces of first data to obtain the respective quantum state information.

Specifically, each of the operators 322 is configured to receive and process one of the plurality of pieces of first data based on the preset time sequence, and output the quantum state information of one measured qubit.

By configuring the data distributor 321 and the plurality of operators 322 to divide and process the first digital signal containing the quantum state information of the plurality of qubits 12 to obtain the quantum state information of one measured qubit 12, the separate measurement or on-demand measurement of the plurality of qubits 12 connected with one qubit measurement bus 11 can be realized, and the utilization rate of qubits 12 on the quantum chip 1 can be improved.

As shown in Fig. 8, for example, as an implementation of the embodiment of the present application, the ADC unit 31 includes at least one acquisition channel, any one of which is configured to acquire a qubit reading feedback signal output by a qubit measurement bus 11. In the present application, the ADC unit 31 is used to acquire the qubit reading feedback signal output from the output end of the qubit measurement bus 11 on the quantum chip 1. Specifically, the ADC unit 31 can have one acquisition channel or a plurality of acquisition channels, and each acquisition channel is connected with the output end of one qubit measurement bus 11 on the quantum chip 1. By selecting the ADC unit 31 with a plurality of acquisition channels, qubit reading feedback signals output by output ends of the plurality of qubit measurement buses 11 are acquired, so that the measurement of the qubits 12 connected with the plurality of qubit measurement buses 11 is realized, which facilitates the improvement of the measurement efficiency of the qubits 12.

Referring to Fig. 5 and Fig. 8, it can be seen that each qubit measurement bus 11 is connected with an output channel of the DAC unit 22 for receiving the qubit reading signal and connected with an acquisition channel of the ADC unit 31 for outputting the qubit reading feedback signal.

For example, as an implementation of the embodiment of the present application, both the waveform output unit 21 and the data processing unit 32 are FPGA (Field Programmable Gate Array). The waveform output unit 21 is configured to generate the measurement waveforms for the qubits 12 connected with the qubit measurement bus 11 that needs to be measured, and the respective data processing unit 32 is configured to process the first digital signal output by the qubit bus. When the quantum measurement and control system of the present application is applied, both the waveform output unit 21 and the data processing unit 32 adopt FPGA. The measurement waveform and empty waveform corresponding to each qubit 12 can be pre-stored in the memory of the FPGA such that the measurement waveform of the qubit can be directly output at the time when the respective qubit needs to be measured, and the plurality of pieces of first data can be processed quickly and timely to output a respective result, thereby improving the measurement efficiency of the quantum measurement and control system.

For example, as an implementation of the embodiment of the present application, the preset time sequence is determined according to the execution time and the measurement time of a quantum computing task to be executed. The quantum computing task is usually executed on the quantum chip 1, and specifically, run on the qubit 12 on the quantum chip 1. After determining the quantum computing task to be executed, the execution time and measurement time of this quantum computing task, i.e., the execution time when the qubit 12 runs the quantum computing task and the measurement time when a result of the execution needs to be measured, can be obtained, so as to further determine the preset time sequence of the control signals and the qubit reading signals that need to be applied to the qubits 12.

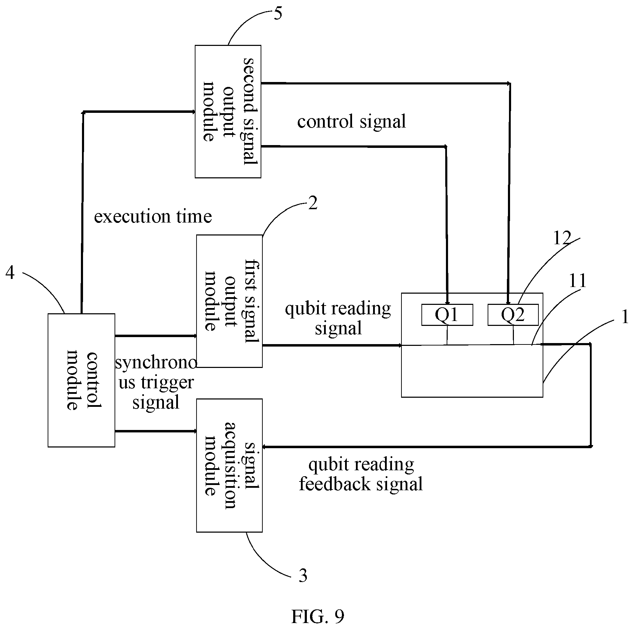

As shown in Fig. 9, for example, as an implementation of the embodiment of the present application, the quantum measurement and control system further includes a second signal output module 5, which is configured to output control signals to a plurality of qubits 12 connected with the qubit measurement bus 11 in response to the execution time, wherein the control signals are configured to regulate the quantum state information of the qubits 12. Specifically, the second signal output module 5 can output the control signals to respective qubits 12, respectively, so as to regulate the quantum state information of the respective qubits 12.

Specifically, the quantum state information of the qubit 12 is measured by the quantum measurement and control system, and the quantum state information of the qubit 12 is regulated by the control signal applied by the second signal output module 5. The control signal needs to be set according to the running quantum computing task and applied to the respective qubit at the execution time. Through the cooperation of the second signal output module 5, the first signal output module 2 and the signal acquisition module 3, the quantum computing task is executed by the quantum chip 1 and the respective result of the task is obtained through measurement and acquisition.

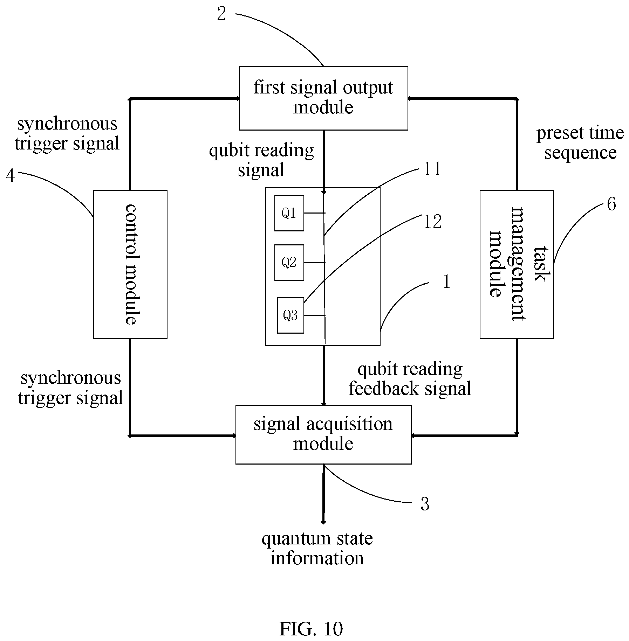

As shown in Fig. 10, for example, as an implementation of the embodiment of the present application, the quantum measurement and control system further includes a task management module 6, which is configured to receive the execution time and measurement time of the quantum computing task to be executed and output the corresponding preset time sequence.

Specifically, the quantum computing task to be executed can be one task or a plurality tasks. The task management module 6 is configured to receive a plurality of quantum computing tasks to be executed, obtain the execution time and measurement time of each quantum computing task, that is, the execution time when the qubit 12 runs the quantum computing task and the measurement time when the result of the execution is measured, and further determine the preset time sequence of the control signal and the measurement signal that needs to be applied to the qubit 12. Since the above preset time sequence of the control signal and measurement signal is stored in the quantum measurement and control system, the quantum measurement and control system can output the control signal and synthesized waveform for measurement according to the preset time sequence without relying on the upper computer to issue them, thus improving the measurement efficiency of the quantum chip 1 by the quantum measurement and control system.

In addition, in the process of the quantum chip running the quantum computing task, the task management module 6 can also receive the newly added quantum computing task to be executed, and based on the execution time and measurement time of the newly added quantum computing task, send the preset time sequence to a waveform generating unit 211 in an idle state in the first signal output module 2, and the waveform generating unit 211 outputs the measurement waveform to a qubit 12 on the qubit measurement bus 11 other than qubits being measured, so as to realize the measurement of a plurality of qubits 12 on the qubit measurement bus 11. Specifically, the task management module 6 can update the preset time sequence based on the execution time and measurement time of the newly added quantum computing task to be executed, and send the updated preset time sequence to the waveform generating unit 211 in the idle state in the first signal output module 2, and the waveform generating unit 211 outputs the measurement waveform to a qubit 12 connected with the qubit measurement bus 11 other than qubits being measured. The waveform generating unit 211 in the idle state may refer to a waveform generating unit 211 that outputs an empty waveform or a waveform generating unit 211 that does not output an measurement waveform.

For example, as an implementation of the embodiment of the present application, the first signal output module 2 and the signal acquisition module 3 are located on the same board card. When the quantum chip 1 is operated for quantum calculating, by the first signal output module 2 and the signal acquisition module 3, the qubits 12 on the quantum chip 1 can be measured and processed to obtain the respective quantum state information, and then obtain the calculation result. In the quantum measurement and control system of the present application, the first signal output module 2 and the signal acquisition module 3 are integrated on one board card, and a plurality of the first signal output modules 2 and a plurality of the signal acquisition modules 3 are added by adding board cards, thus realizing the measurement of the quantum chip 1 with more digits.

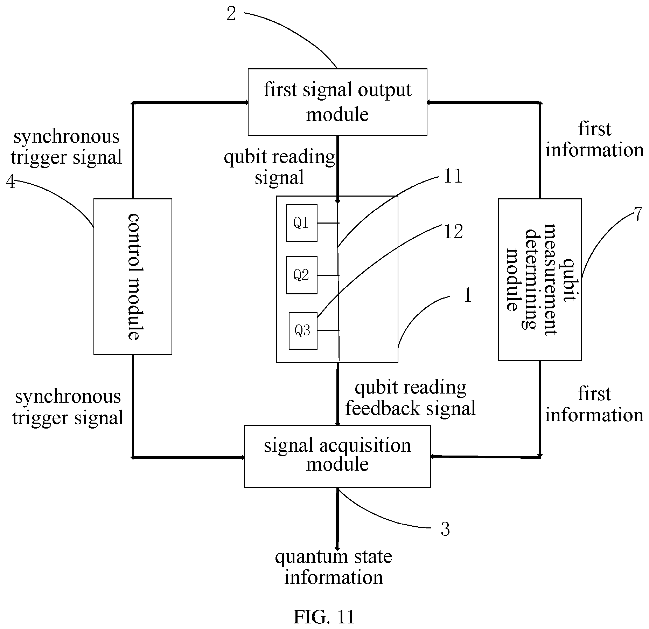

As shown in Fig. 11, based on the same application concept, another embodiment of the present application also provides a quantum measurement and control system, which is configured for measurement of qubits 12 connected with at least one qubit measurement bus 11 on a quantum chip 1; wherein the measurement of the qubits 12 includes applying a qubit reading signal to the qubits 12, and acquiring from the qubits and processing a qubit reading feedback signal after a preset delay. The quantum measurement and control system includes a qubit measurement determining module 7, a first signal output module 2, a signal acquisition module 3 and a control module 4.

The qubit measurement determining module 7 is configured to determine first information on whether each of qubits 12 connected with a qubit measurement bus 11 needs to be measured at a current time. The first signal output module 2 is configured to: according to the first information, generate measurement waveforms corresponding to qubits which need to be measured and process the measurement waveforms into a synthesized waveform, and output a qubit reading signal corresponding to the synthesized waveform to the qubit measurement bus 11. The signal acquisition module 3 is configured to acquire and process a qubit reading feedback signal output by the qubit measurement bus 11 based on the first information and the preset delay, to obtain quantum state information of each qubit 12 which needs to be measured. The control module 4 is configured to output a synchronous trigger signal for determining the preset delay to the first signal output module 2 and the signal acquisition module 3.

Specifically, a plurality of qubits 12 connected with a qubit measurement bus 11 will be arranged to execute quantum computing tasks according to whether they are idle or not, and the qubits 12 need to be measured when they finish the quantum computing tasks. It can be understand that, as the plurality of qubits 12 execute different quantum computing tasks and corresponding measurement operations, the measurement time of each of the qubits may be relatively close to each other. If the method in prior art is adopted, it is necessary to finish the measurement of one qubit before performing the measurement of the next qubit, which requires measuring the plurality of qubits 12 on the qubit measurement bus 11 at any time to obtain accurate quantum state information, and cannot accurately measure each qubit.

In order to guarantee that the measurement is performed timely, the qubit measurement determining module 7 is configured to: based on the execution progress of the quantum computing task on each qubit 12 connected with the qubit measurement bus 11, determine whether the task has been finished at the current time and whether the qubit needs to be measured, and record these determined information as the first information and send it to the first signal output module 2 and the signal acquisition module 3.

For example, when the first information indicates that the qubits need to be measured at the current time, the first signal output module 2 will generate measurement waveforms corresponding to all the qubits that need to be measured at the current time and process the measurement waveforms into one synthesized waveform, and output the qubit reading signal corresponding to the synthesized waveform to the qubit measurement bus 11. Correspondingly, it is necessary to acquire the qubit reading feedback signal corresponding to the qubit reading signal from the qubit measurement bus 11 through the signal acquisition module 3 after the preset delay, so as to guarantee that the qubit reading signal has reached the qubits and the quantum state information of the qubits has been read, and further to guarantee that the quantum state information carried by the acquired qubit reading feedback signal is accurate.

In order to guarantee the relatively stable preset delay between the first signal output module 2 and the signal acquisition module 3, it is necessary to provide a working synchronous trigger signal to the first signal output module 2 and the signal acquisition module 3. Therefore, the quantum measurement and control system of the present application is provided with the control module 4 configured for outputting the synchronous trigger signal for determining the preset delay to the first signal output module 2 and the signal acquisition module 3.

In the quantum measurement and control system provided by the present application, the qubit measurement determining module 7 determines the first information that a plurality of qubits 12 connected with a qubit measurement bus 11 need to be measured at the current time, wherein the qubits 12 that need to be measured can be qubits 12 that need to be measured after executing a quantum computing task, or can be qubits 12 that need to be measured after executing different quantum computing tasks, or qubits 12 that need to be measured after executing the newly added quantum computing task; and the first signal output module 2 outputs the measurement waveforms to the respective qubits 12 based on the first information, and the signal acquisition module 3 acquires and processes the quantum state information of the qubits, thus realizing the asynchronous measurement of the plurality of qubits 12 connected with the qubit measurement bus 11.

In order to more quickly respond to the first information sent by the qubit measurement determining module 7, the first signal output module 2 further updates the measurement waveforms for the qubits according to its own internal working clock characteristics. Specifically, the first signal output module 2 is further configured to update the waveform for each qubit according to a first preset time. The first preset time is determined according to the working clock frequency of the first signal output module.

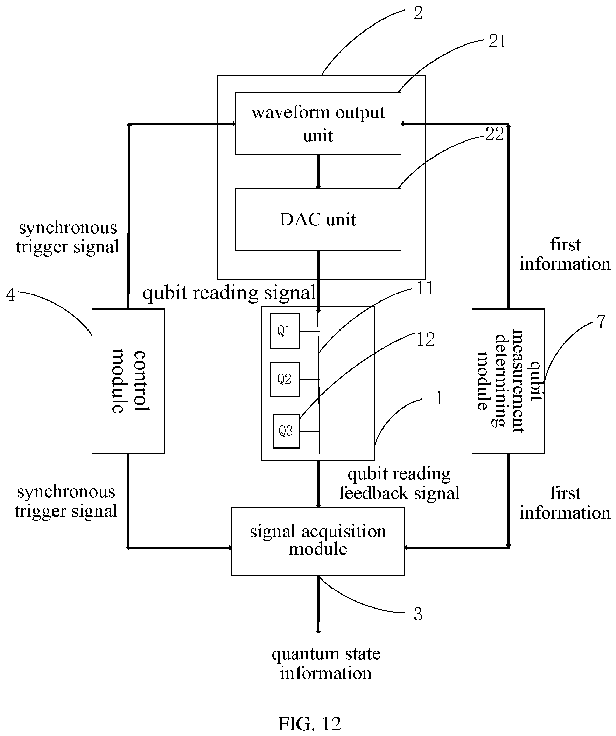

As shown in Fig. 12, as a specific embodiment of the present application, the first signal output module 2 in the present application includes a waveform output unit 21 and a DAC unit 22 which are connected with each other.

The waveform output unit 21 is configured to generate measurement waveforms corresponding to the qubits 12 connected with the qubit measurement bus 11 based on the first information and process the measurement waveforms into the synthesized waveform. The DAC unit 22 is configured to receive the synthesized waveform and output the qubit reading signal corresponding to the synthesized waveform to the input end of the qubit measurement bus 11.

Specifically, the qubit measurement bus 11 is connected with a plurality of qubits 12. At a certain time, a plurality of qubits 12 need to be measured. For the qubits 12 which need to be measured, the waveform output unit 21 internally provides respective measurement waveforms, and the waveform output unit 21 internally synthesizes these measurement waveforms into one synthesized waveform. The synthesized waveform can realize the asynchronous measurement of several qubits 12 connected with the qubit measurement bus 11 at the current time.

The DAC unit 22 is connected with the waveform output unit 21, and process the synthesized waveform obtained after the synthesizing process into a specific analog signal, i.e., the qubit reading signal, and transmit the qubit reading signal to the input end of the qubit measurement bus 11, so as to realize the measurement of the qubits 12 connected with the qubit measurement bus 11.

In conjunction with Fig. 4, for example, as an implementation of the embodiment of the present application, the waveform output unit includes a plurality of waveform generating units 211 and a waveform synthesizing unit 212. The plurality of waveform generating units 211 are configured to generate the measurement waveforms corresponding to the qubits which need to be measured according to the first information, wherein any one of the waveform generating units 211 is configured to store and output a measurement waveform for a qubit 12. The waveform synthesizing unit 212 is connected with the plurality of waveform generating units 211, and is configured to process the measurement waveforms output by the plurality of waveform generating units 211 into the synthesized waveform.

Specifically, the number of the waveform generating units 211 is equal to the number of qubits 12 connected with the qubit measurement bus 11, and the waveform generating units 211 and the qubits 12 are in one-to-one correspondence. Each of the waveform generating units 211 stores a measurement waveform in its internal storage space and outputs the measurement waveform. Specifically, when it is determined from the first information that a qubit 12 needs to be measured at the current time, the waveform generating unit 211 outputs a measurement waveform corresponding to the qubit. When a plurality of qubits need to be measured at the current time, the plurality of waveform generating units 211 each outputs a measurement waveform, and the waveform synthesizing unit 212 will synthesize a plurality of measurement waveforms into the synthesized waveform, which will be converted into an analog signal (i.e., the qubit reading signal) by the DAC unit 22, and thus asynchronous measurement of all qubits connected with the qubit measurement bus 11 will be realized through the qubit measurement bus 11.

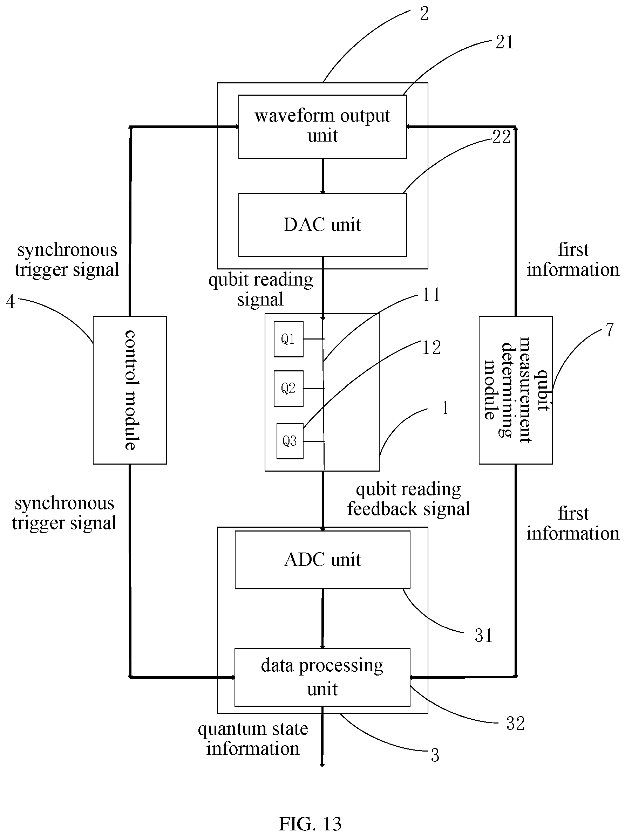

With continuous reference to Fig. 13, for example, as an implementation of the embodiment of the present application, the signal acquisition module includes an ADC unit 31 configured to acquire and process the qubit reading feedback signal output by the qubit measurement bus 11 to obtain a first digital signal, wherein the first digital signal carries quantum state information of measured qubits 12 connected with the qubit measurement bus 11; and a data processing unit 32 connected with the ADC unit 31 and configured to receive and process the first digital signal to obtain the quantum state information of the measured qubits 12.

Specifically, the qubit reading feedback signal output from the output end of the qubit measurement bus 11 is an analog signal carrying quantum state information of a plurality of qubits 12 connected with the qubit measurement bus 11. In the present application, the ADC unit 31 is configured to acquire the qubit reading feedback signal carrying the quantum state information and convert the signal into the first digital signal, which facilitates the obtaining of the quantum state information of the measured qubits 12 through subsequent processing.

The first digital signal carries the quantum state information of a plurality of measured qubits 12. The data processing unit 32 is configured to: connect with the ADC unit 31 to receive the first digital signal obtained after converting process; process the first digital signal in response to the synchronous trigger signal to obtain a plurality of sub-signals, each of which characterizes quantum state information of a measured qubit 12; and process the plurality of sub-signals to obtain specific quantum state information.

With continuous reference to Fig. 7, for example, as an implementation of the embodiment of the present application, the data processing unit includes a data distributor 321 configured to receive and process the first digital signal to obtain a plurality of pieces of first data and output the plurality of pieces of first data, wherein, the plurality of pieces of first data and a plurality of qubits 12 connected with the qubit measurement bus 11 are in one-to-one correspondence; and a plurality of operators 322 connected with the data distributor 321, wherein each of the plurality of operators 322 is configured to receive and process one of the plurality of pieces of first data and output quantum state information of one measured qubit 12.

Specifically, the first digital signal output by the ADC unit 31 and received by the data processing unit 32 contains the quantum state information of the plurality of qubits 12. The data distributor 321 is configured to receive the first digital signal, and divide the first digital signal into the plurality of pieces of first data according to the measured qubits 12, wherein each of the plurality of pieces of first data characterizes quantum state information of one measured qubit 12. The plurality of operators 322 are configured to connect with the data distributor 321, and each of the plurality of operators 322 receives and processes one of the plurality of pieces of first data to obtain the respective quantum state information.

Specifically, each of operators 322 is specifically configured to receive and process one of the plurality of pieces of the first data based on the first information and the preset delay, and output quantum state information of one measured qubit 12.

By configuring the data distributor 321 and the plurality of operators 322 to divide and process the first digital signal containing quantum state information of the plurality of qubits 12 to obtain quantum state information of a single measured qubit 12, quantum states of the plurality of qubits 12 can be measured at the same time, thus improving the utilization rate of the qubits 12 on the quantum chip 1.

As mentioned above, the qubit measurement determining module 7 is provided in the quantum measurement and control system, and is configured to receive a quantum computing task, analyze the quantum computing task to obain various regulation and control signals that need to be applied when the quantum computing task is executed on a qubit of the quantum chip and an measurement operation that needs to be performed at the measurement time after the task has been executed, and determine measurement information of the qubit according to the execution time and the measurement time.

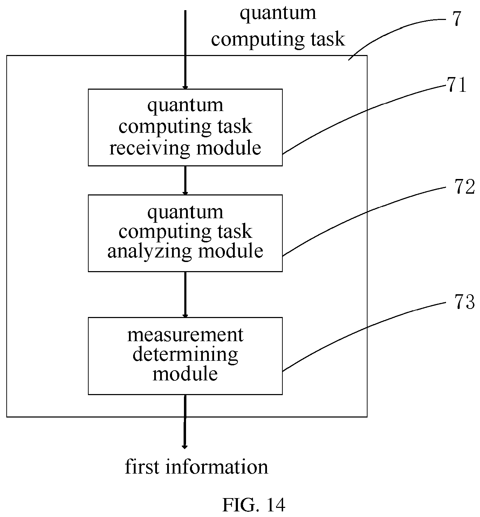

As shown in Fig. 14, for example, as an implementation of the embodiment of the present application, the qubit measurement determining module 7 includes a quantum computing task receiving module 71 configured to receive a quantum computing task; a quantum computing task analyzing module 72 configured to analyze the quantum computing task and determine a task execution time and a measurement time of a qubit; and a measurement determining module 73 configured to determine the first information on whether each of qubits connected with the qubit measurement bus 11 needs to be measured at the current time, based on the execution time and the measurement time.

Based on the same application concept, an embodiment of the application also provides a quantum computer, which includes a quantum chip 1 and the above quantum measurement and control system, wherein the quantum chip 1 is provided with at least one group of qubits 12, each group of qubits 12 is connected with one qubit measurement bus 11; and an input end of each qubit measurement bus 11 is connected with the first signal output module 2, and an output end of each qubit measurement bus 11 is connected with the signal acquisition module 3.

In practical application, in order to realize the quantum computing, it is necessary to provide an operation control signal to an operation control signal line through a control signal generating apparatus arranged outside the quantum chip, and provide a reading signal (also called a measurement signal) to one end of the qubit measurement bus through a reading signal generating apparatus, and acquire a reading feedback signal, which carries the quantum state information, fed back by the other end of the qubit measurement bus.

In the existing apparatus, a reading signal generating apparatus connected with a qubit measurement bus is usually built-in with an overall measurement waveform for read and measurement of a plurality of qubits, and then the read and measurement of the qubits connected to the qubit measurement bus is realized by triggering the output of a signal based on the overall measurement waveform. Although the reading signal generating apparatus with this structure is simple in structure, setting and control, the reading signal generating apparatus with this structure is not conducive to the separate measurement or on-demand measurement of different qubits connected with the qubit measurement bus.

As shown in Fig. 1, the structure of quantum chip 1 includes a plurality of qubits 12 and a plurality of resonant cavities 13 which are in one-to-one correspondence and coupled with each other. One end of each resonant cavity 13 away from a qubit 12 corresponding thereof is connected with the qubit measurement bus 11, and the qubit measurement bus 11 has an input end 111 for receiving a qubit reading signal to measure the quantum state information of a plurality of qubits 12 connected with the qubit measurement bus 11. Since the plurality of qubits 12 are connected with one qubit measurement bus 11, when the qubit reading signal is applied to the input end 111 of the qubit measurement bus 11, the quantum state information of all qubits 12 connected with the qubit measurement bus 11 can be read.

In the current reading system of the quantum chip 1, when quantum computing tasks that need to be executed by qubits 12 on a qubit measurement bus 11 are determined, parameters of the qubit reading signal that needs to be applied to the qubit measurement bus 11 are determined. These parameters are sent to the reading signal generating apparatus, which outputs a measurement signal to the qubit measurement bus 11. In this process, the reading signal generating apparatus is only configured to output a signal waveform corresponding to the set parameters.

It is conceivable that different quantum computing tasks are not simultaneously sent to a plurality of qubits on one qubit measurement bus 11 on the quantum chip. For the qubit measurement bus 11, a measurement waveform corresponding to the currently executed quantum computing task is known, while measurement waveforms corresponding to other subsequent newly added quantum computing tasks are unpredictable, and a measurement waveform corresponding to a newly added quantum computing task to be executed cannot be obtained through preset parameters. Therefore, the existing reading signal generating apparatus cannot meet the measurement requirements of the newly added quantum computing task to be executed.

When the plurality of qubits 12 on a qubit measurement bus 11 execute different quantum computing tasks, and measurement times and measurement waveforms of the plurality of qubits 12 will change with the update of the quantum computing tasks, the existing reading signal generating apparatus cannot meet the measurement requirements.

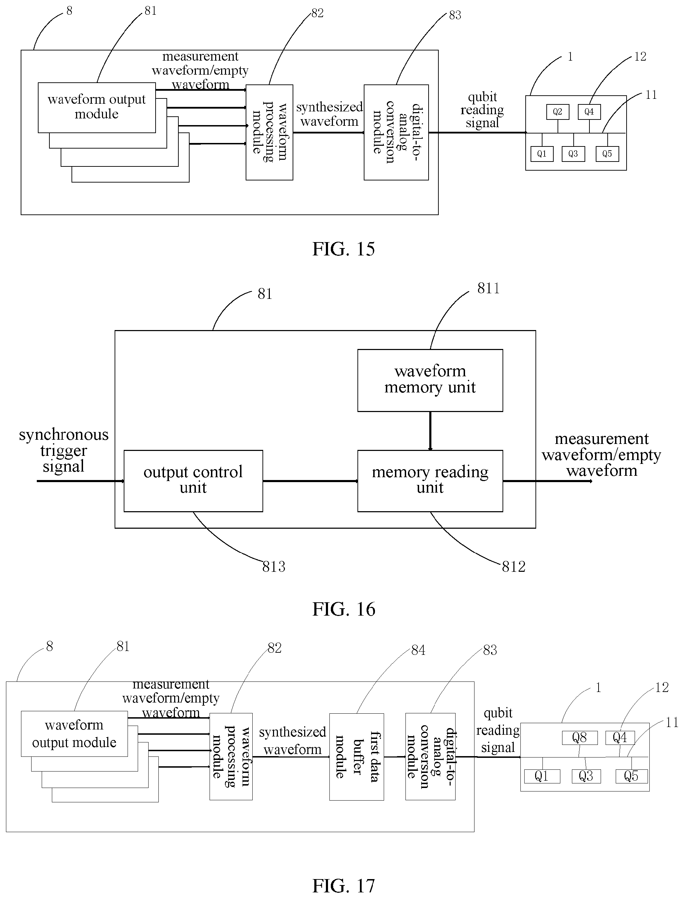

As shown in Fig. 15, an embodiment of the present application provides a signal generating apparatus 8. The signal generating apparatus 8 includes:
a plurality of waveform output modules 81, each of which is configured to output a measurement waveform or an empty waveform corresponding to a qubit 12; a waveform processing module 82 connected with the plurality of waveform output modules 81, and configured to receive and process waveforms or empty waveforms output by the waveform output modules 81 to obtain a synthesized waveform, and output the synthesized waveform; and a digital-to-analog conversion module (DAC) 83 connected with the waveform processing module 82, and configured to receive and process the synthesized waveform to obtain the qubit reading signal corresponding to the synthesized waveform, and output the qubit reading signal.

Specifically, each waveform output module 81 can output a measurement waveform, which is configured to measure a qubit 12. When the qubit 12 does not need to be measured, the waveform output module 81 can output an empty waveform. The number of waveform output modules 81 is equal to the number of qubits 12 connected with the qubit measurement bus 11, and the waveform output modules 81 and the qubits 12 are in one-to-one correspondence.

When several qubits 12 in qubits 12 connected with the qubit measurement bus 11 need to execute quantum computing tasks, after the quantum computing tasks are finished on these qubits 12, a reading signal needs to be applied to measure quantum state information of these qubits 12. That is, a waveform output module 81 corresponding to a qubit 12 which will execute a task will output a specific measurement waveform to the qubit 12, and correspondingly, a waveform output module 81 corresponding to an idle qubit 12 that does not need to execute the quantum computing task will output an empty waveform.

Since there are a plurality of qubits 12 which execute quantum computing tasks, a plurality of measurement waveforms need to be applied. The waveform processing module 82 is configured to synthesize a plurality of measurement waveforms output by waveform output modules 81 corresponding to qubits 12 which will execute the tasks and empty waveforms output by waveform output modules 81 for idle qubits 12 to form one synthesized waveform, and apply the synthesized waveform to the qubit measurement bus 11 for reading the quantum state information of qubits 12 which execute the quantum computing tasks.

After a plurality of measurement waveforms and/or empty waveforms are processed into the synthesized waveform by the waveform processing module 82, the digital-to-analog conversion module 83 can process the synthesized waveform into a specific analog signal, i.e., the qubit reading signal, and transmit it to the qubit measurement bus 11 for reading quantum state information of qubits 12 that have performed the quantum computing tasks, and performing the measurement operation on the qubits.

In the present application, the plurality of waveform output modules 81, which are in one-to-one correspondence with a plurality of qubits 12 connected with the qubit measurement bus 11, are configured to output measurement waveforms corresponding to qubits 12 which will execute quantum computing tasks and empty waveforms for other idle qubits 12. The plurality of measurement waveforms and/or empty waveforms are processed into one synthesized waveform by the waveform processing module 82, and then the synthesized waveform is processed into a specific qubit reading signal by the digital-to-analog conversion module 83, the qubit reading signal is configured for reading the quantum state information of the qubits 12 which have finished the quantum computing tasks.

Since the waveform output modules 81 and the plurality of qubits 12 connected with the qubit measurement bus 11 are in one-to-one correspondence, by configuring the plurality of waveform output modules 81 to output the respective measurement waveforms respectively, configuring the waveform processing module 82 to process the measurement waveforms into one synthesized waveform, and then configuring the digital-to-analog conversion module 83 to convert the synthesized waveform into the qubit reading signal and output it to one qubit measurement bus 11 on the quantum chip 1, the separate measurement or on-demand measurement of the plurality of qubits 12 connected with the qubit measurement bus 11 can be realized, so as to guarantee all qubits 12 connected with the qubit measurement bus 11 can be used for the same or different quantum computing tasks, thus improving the utilization rate of qubits on the quantum chip.

As shown in Fig. 16, as an implementation of the embodiment of the present application, the waveform output module 81 in the embodiment of the present application includes a waveform memory unit 811 configured to store the measurement waveform or the empty waveform; a memory reading unit 812 connected with the waveform memory unit 811, and configured to read the measurement waveform or the empty waveform in the waveform memory unit 811 in response to a second control signal and output the measurement waveform or the empty waveform to the waveform processing module 82; and a output control unit 813 connected with the memory reading unit 812 and configured to output the second control signal according to a preset time sequence.

Specifically, the waveform output module 81 is configured to output the measurement waveform or empty waveform required by a qubit 12 which will execute a quantum computing task. During the execution of the quantum computing task, parameters such as an application time and duration of the measurement waveform are preset according to the whole execution flow of the quantum computing task, that is, the waveform output by the waveform output module 818 has a preset time sequence. In the present application, the output control unit 813 is provided in the waveform output module 81 for receiving the preset time sequence of waveform output for the quantum computing task which needs to be executed, and outputting a second control signal according to the preset time sequence, wherein the second control signal is configured to control the output of the measurement waveform.

The waveform memory unit 811 is further provided in the waveform output module 81 for storing the measurement waveform and the empty waveform; the measurement waveform or empty waveform corresponds to one of the qubits 12 connected with the qubit measurement bus 11. For example, if one qubit measurement bus 11 is connected with five qubits 12, correspondingly, there are five waveform output modules 81, each of which is provided with the waveform memory unit 811 to store the measurement waveform or empty waveform for each of the five qubits 12.

In addition, in addition to the waveform memory unit 811 configured for storing the waveform and the output control unit 813 configured for sending the second control signal based on a preset time sequence, the memory reading unit 812 is further provided in the waveform output module 81 for reading the measurement waveform or empty waveform from the waveform memory unit 811 in response to the second control signal and outputting the measurement waveform or empty waveform to the waveform processing module 82. Based on whether a qubit 12 has finished the quantum computing task, a waveform output module 81 corresponding to the qubit 12 is determined to output the measurement waveform or empty waveform, and the preset measurement waveform or empty waveform is read from the memory reading unit 812 and output to the waveform processing module 82, thus avoiding the generation of the measurement waveform or empty waveform during the measurement and improving the working efficiency of the signal generating apparatus 8.

Further, the output control unit 813 is further configured to receive a synchronous trigger signal corresponding to a qubit 12, and output the second control signal according to the synchronous trigger signal and the preset time sequence. As mentioned above, for a plurality of qubits on one qubit measurement bus 11, when a qubit does not need to be measured, a waveform output module corresponding to the qubit will continuously output empty waveforms; and when several qubits in the plurality of qubits need to be measured, the memory reading unit is controlled to read the measurement waveform from the waveform memory unit and output it to the waveform processing module by sending the synchronous trigger signal to each of output control units in the waveform output modules corresponding to these qubits. It is conceivable that a waveform output module that has not received the synchronous trigger signal still outputs the empty waveform. With the synchronous trigger signal, the present application can not only guarantee the trigger synchronization among the waveform output modules that output measurement waveforms, and further guarantee the measurement synchronization among a plurality of qubits that have finished the quantum computing tasks; but also achieve the function of a switch, that is, a measurement waveform output function of a waveform output module corresponding to a qubit to be measured is enabled by the synchronous trigger signal. For details of the synchronous trigger signal, please refer to the above embodiment of the quantum measurement and control system, which will not be described here.

For example, as an implementation of the embodiment of the present application, the second control signal includes a start signal and a stop signal, and the output control unit 813 includes a first array parametron configured to output a first time parameter and a second time parameter corresponding to the preset time sequence in response to the synchronous trigger signal; and a first timer connected with the first array parametron, and configured to start timing in response to the synchronous trigger signal until the first time parameter and the second time parameter, send the start signal to the memory reading unit 812 in response to the first time parameter, and send the stop signal to the memory reading unit 812 in response to the second time parameter, wherein the start signal and the stop signal are configured to control the memory reading unit 812 to output a measurement waveform between the first time parameter and the second time parameter.

Specifically, the output control unit 813 is internally composed of an array parametron in a first-in first-out queue and a timer. The first array parametron outputs the first time parameter ToO1 and the second time parameter ToO2 corresponding to the preset time sequence when receiving the synchronous trigger signal, and the first timer starts timing. When the time of the timer is the same as ToO1, the start signal is sent to the memory reading unit 812; and when the time of the timer is the same with ToO2, the stop signal is sent to the memory reading unit 812. At this time, the first array parametron updates the time parameters to To11 and To12, and the first timer starts timing again, for outputting the next set of first time parameter To11 and second time parameter To12 based on a next synchronous trigger signal and the preset time sequence.

For example, as an implementation of the embodiment of the present application, the waveform processing module 82 is an adder unit. Specifically, the waveform processing module 82 is a module configured to process a plurality of measurement waveforms and/or empty waveforms into one synthesized waveform, and the measurement waveform is a waveform with a certain amplitude and shape, such as a square wave, a sine wave, a cosine wave and the like. In the field of digital signal processing, an adder can be used to synthesize waveforms. Specifically, input ends of the adder are connected with the plurality of waveform output modules 81, to receive the measurement waveforms and/or empty waveforms output by the plurality of waveform output modules 81, and output the synthesized waveform after processing the plurality of waveforms. Therefore, the number of input ends of the adder is equal to the number of waveform output modules 81. The adder unit has a simple structure and fast processing speed, which facilitates improving of the working efficiency of the signal generating apparatus 8.

As shown in Fig. 17, as an implementation of the embodiment of the present application, the signal generating apparatus 8 further includes a first data buffer module 84, wherein an input end of the first data buffer module 84 is connected with an output end of the waveform processing module 82, and an output end of the first data buffer module 84 is connected with the digital-to-analog conversion module 83. The first data buffer module 84 is configured to receive and store the synthesized waveform. The digital-to-analog conversion module 83 is configured to read from the first data buffer module 84 and process the synthesized waveform to obtain the qubit reading signal corresponding to the synthesized waveform and output the qubit reading signal.

By configuring the first data buffer module 84 to temporarily store the synthesized waveform, which is read by the digital-to-analog conversion module connected with the output end of the first data buffer module 84, the working efficiency of the signal generating apparatus 8 is improved.

As an implementation of the embodiment of the present application, the plurality of waveform output modules 81, the waveform processing module 82 and the digital-to-analog conversion module 83 are located on the same board card. The signal generating apparatus 8 in the present application is used in a quantum measurement and control system, which is a device for testing the quantum chip 1. The signal generating apparatus 8 in the present application is configured to provide a qubit reading signal for a plurality of qubits 12 connected with a qubit measurement bus 11 on the quantum chip 1. In general, a plurality of qubit measurement buses 11 are integrated in the quantum chip 1 for connecting more qubits 12. Therefore, a plurality of the signal generating apparatuses 8 in the present application are also needed in the quantum measurement and control system. Each module included in the signal generating apparatus 8 in the present application is integrated on the same board card, and the integration of the signal generating apparatus 8 is realized by adding a board card, which improves the integration of the whole quantum measurement and control system and is suitable for testing the quantum chip 1 with more digits.

As an implementation of the embodiment of the present application, the signal generating apparatus 8 further includes a first clock module, which is provided on the board card and configured to provide a clock parameter for the plurality of waveform output modules 81. As mentioned above, the plurality of waveform output modules 81 each receives the synchronous trigger signal corresponding to a qubit 12 and the preset time sequence, and outputs the measurement waveform or the empty waveform. By providing the first clock module on the board card to guarantee that the clock parameter is synchronized among the plurality of waveform output modules 81 and further guarantee that the preset time sequence is synchronized among the plurality of waveform output modules 81, the fidelity of the qubit reading signal output by the signal generating apparatus 8 is improved.

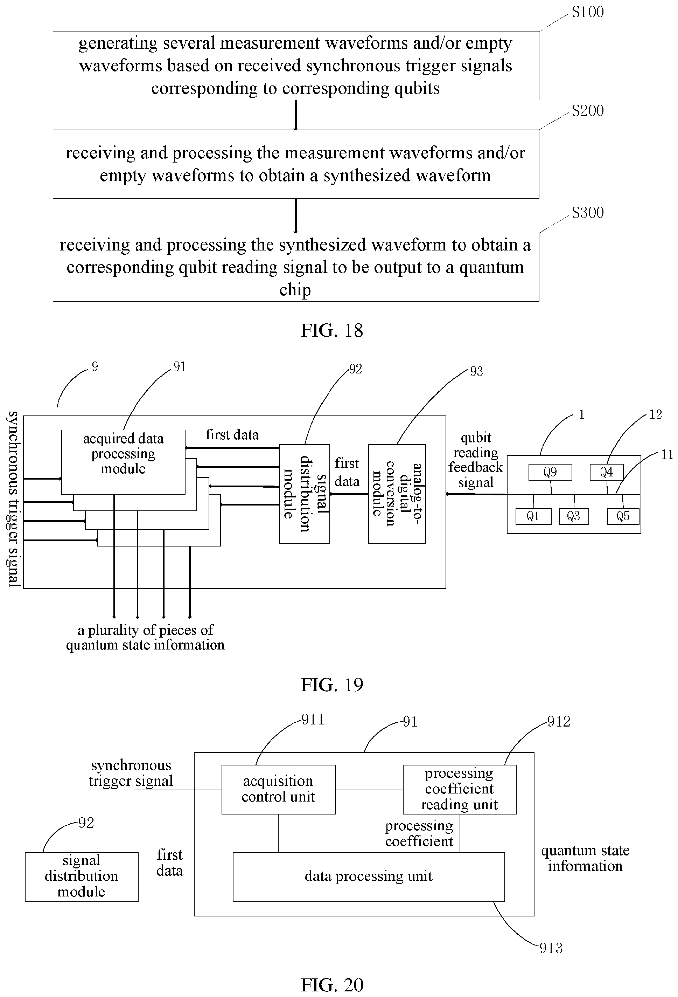

As shown in Fig. 18, based on the same application concept, an embodiment of the application also provides a method for generating a qubit reading signal, including:
Step S100, generating several measurement waveforms and/or empty waveforms based on received synchronous trigger signals corresponding to corresponding qubits 12;
Step S200: receiving and processing the measurement waveforms and/or empty waveforms to obtain a synthesized waveform; and
Step S300: receiving and processing the synthesized waveform to obtain a corresponding qubit reading signal to be output to a quantum chip 1.

Specifically, a plurality of qubit measurement buses **11** are provided on the quantum chip 1, and each of the qubit measurement buses **11** is connected with a plurality of qubits 12. When qubits 12 on one qubit measurement bus **11** need to be measured, the qubit reading signal can be applied to the qubit measurement bus 11. The applied qubit reading signal is configured to read the plurality of qubits 12. Since the working frequency and the measurement time of each qubit 12 is different, the measurement waveform that needs to be applied to each qubit 12 is not exactly the same, and further the qubit reading signal needs to include measurement waveforms for all qubits 12 on the qubit measurement bus 11.

When the present application is practiced, after receiving the synchronous trigger signals for the corresponding qubits 12, qubits 12 that need to execute quantum computing tasks are determined, and then a measurement waveform corresponding to each qubit 12 that will execute the task and an empty waveform required by each of other idle qubits 12 on the same qubit measurement bus 11 that do not need to execute an quantum computing task are determined. When several measurement waveforms and/or empty waveforms to be generated are determined, these waveforms can be output by the corresponding waveform output modules, and further, the waveform processing module 82 processes the generated multiple measurement waveforms and/or empty waveforms into one synthesized waveform and transmit the synthesized waveform to the digital-to-analog conversion module 83, and the digital-to-analog conversion module 83 converts the synthesized waveform into a specific analog signal, i.e., the qubit reading signal and outputs the qubit reading signal to the qubit measurement bus 11 on the quantum chip 1, so as to realize the separate measurement or on-demand measurement of a plurality of qubits 12 connected with the qubit measurement bus 11, and guarantee that all the qubits 12 connected with the qubit measurement bus 11 can be used for the same or different quantum computing tasks, thus improving the utilization rate of qubits on the quantum chip.

Based on the same application concept, an embodiment of the present application also provides a quantum measurement and control system, including the above signal generating apparatus 8.

Based on the same application concept, an embodiment of the present application also provides a quantum computer, including the above signal generating apparatus 8 or the above quantum measurement and control system.

Compared with the prior art, in the present application, a plurality of waveform output modules 81, which are in one-to-one correspondence with a plurality of qubits 12 connected with a qubit measurement bus 11, are configured to output measurement waveforms corresponding to qubits 12 which will execute quantum computing tasks and empty waveforms for other idle qubits 12; the plurality of measurement waveforms and/or empty waveforms are processed into one synthesized waveform by the waveform processing module 82, and then the synthesized waveform is processed into a specific qubit reading signal by the digital-to-analog conversion module 83, which is used to read the quantum state information of qubits 12 which have finished the quantum computing tasks. Since the waveform output modules 81 are in one-to-one correspondence with the plurality of qubits 12 connected with the qubit measurement bus 11, the separate measurement or on-demand measurement of a plurality of qubits 12 connected to one qubit measurement bus 11 can be realized by configuring the plurality of waveform output modules 81 to output the respective measurement waveforms respectively, so as to guarantee that all qubits 12 connected with the qubit measurement bus 11 can be used for the same or different quantum computing tasks, thus improving the utilization rate of qubits on the quantum chip.

As mentioned above, the measurement of qubits includes applying the qubit reading signal to the qubits and acquiring and processing a qubit reading feedback signal after the preset delay. In the existing apparatus, a reading feedback signal acquisition apparatus is usually configured to connect to a qubit measurement bus, and process the acquired qubit reading feedback signal to obtain quantum state information of each qubit. However, when the qubits connected with the qubit measurement bus execute different quantum computing tasks respectively, the reading feedback signals output with respect to the qubits for different tasks need to be analyzed and processed according to respective task requirements, that is, the analyzing and processing of the reading feedback signals for the plurality of qubits is not synchronous, and it is difficult for the existing reading feedback signal acquisition apparatus to realize the separate processing or on-demand processing of the reading feedback signals output by different qubits connected with a qubit measurement bus, which greatly reduces the utilization rate of qubits on the quantum chip.

As described above, in the existing signal acquisition system of the quantum chip 1, when the quantum computing tasks that need to be executed by the qubits 12 connected with a qubit measurement bus 11 are determined, the parameters of the qubit reading signal that needs to be applied to the qubit measurement bus 11 are determined, and correspondingly, the qubit reading feedback signal corresponding to the qubit reading signal acquired through the qubit measurement bus 11 is determined. The quantum state information of the qubit 12 that has finished the quantum computing task can be obtained by acquiring, processing and analyzing the qubit reading feedback signal through the signal acquisition apparatus.

It is conceivable that when a plurality of qubits 12 on the same qubit measurement bus 11 on the quantum chip 1 execute different quantum computing tasks respectively, or a plurality of quantum computing tasks are not executed synchronously, the existing reading signal acquisition apparatus needs to finish the acquisition of the qubit reading feedback signal output by a qubit that executes a single quantum computing task before processing the qubit reading feedback signal output by a qubit that executes a next quantum computing task, and cannot realize the separate processing or on-demand processing of qubit reading feedback signals output by a plurality of qubits 12.

Please refer to Fig. 19, which is a signal acquisition apparatus 9 provided by an embodiment of the present application. The signal acquisition apparatus 9 includes: an analog-to-digital conversion module (ADC) 93, which is connected with an output end 112 of a qubit measurement bus 11, and configured to receive and process a qubit reading feedback signal to obtain a first digital signal, wherein the qubit reading feedback signal carries quantum state information of a plurality of qubits 12 connected with the qubit measurement bus 11; a signal distribution module 92, which is connected with the analog-to-digital conversion module 93, and configured to receive and process the first digital signal to obtain a plurality of pieces of first data, and output the plurality of pieces of first data, wherein the plurality of pieces of first data and the plurality of qubits 12 connected with the qubit measurement bus 11 are in one-to-one correspondence; and a plurality of acquired data processing modules 91, which are connected with the signal distribution module 92, and each of which is configured to receive a synchronous trigger signal corresponding to a qubit 12, process first data of the qubit 12 corresponding to the synchronous trigger signal, and output quantum state information of the corresponding qubit 12, wherein the number of the acquired data processing modules 91 is equal to the number of the qubits 12 connected with the qubit measurement bus 11.

Specifically, the qubit reading feedback signal acquired through the output end 112 of the qubit measurement bus 11 is an analog signal carrying quantum state information of the plurality of qubits 12 connected with the qubit measurement bus 11. In the present application, the analog-to-digital conversion module 93 is configured to receive the qubit reading feedback signal carrying the quantum state information, and convert the signal into the first digital signal, which facilitates the obtaining of the quantum state information through subsequent processing.

The first digital signal output after being processed by the analog-to-digital conversion module 93 carries the quantum state information of the plurality of qubits 12 connected with the qubit measurement bus 11, and is divided by the signal distribution module 92 to output the plurality of pieces of first data, wherein each of the plurality of pieces of first data corresponds to one qubit 12 connected with the qubit measurement bus 11, that is, each of the plurality of pieces of first data also carries quantum state information of one qubit 12.

After obtaining the plurality of pieces of first data carrying the quantum state information of the qubits 12 connected with the qubit measurement bus 11, by means of the plurality of acquired data processing modules 91, each of which can respectively receive and process one of the plurality of pieces of first data, the quantum state information of the respective qubits 12 can be obtained. After each of the plurality of acquired data processing modules 91 respectively receives respective one of the plurality of pieces of first data, the first data does not be directly processed. An acquired data processing module 91 that needs to process the first data is determined by receiving the synchronous trigger signal corresponding to the qubit 12. That is, an acquired data processing module 91 that receives the synchronous trigger signal will process the received first data, while an acquired data processing module 91 that does not receive a synchronous trigger signal will not process the received first data.

Further, for qubits 12 corresponding to synchronous trigger signals, i.e., several qubits 12 connected with the qubit measurement bus 11 that have finished the current quantum computing tasks, after these qubits 12 have finished the quantum computing tasks, results of the tasks need to be processed and analyzed, and the data analyzing function of the acquired data processing module 91 is enabled through the synchronous trigger signals. Correspondingly, acquired data processing modules 91 corresponding to qubits 12 that do not execute the quantum computing tasks will not receive the synchronous trigger signal, that is, will not process the first data.

Obviously, qubits 12 that are currently not executing an quantum computing task can execute other quantum computing tasks, and acquired data processing modules 91 corresponding to the qubits are enabled by the respective synchronous trigger signals to analyze and process the first data corresponding to other quantum computing tasks. The separate processing or on-demand processing of qubit reading feedback signals corresponding to different quantum computing tasks and output by a plurality of qubits 12 connected with a qubit measurement bus 11 is realized, so that the utilization rate of the qubits 12 on the quantum chip 1 is greatly improved.

In addition, by enabling the data analyzing function of the plurality of acquired data processing modules 91 via receiving synchronous trigger signals corresponding to qubits 12, the trigger synchronization among the plurality of acquired data processing modules 91 can further be ensured, so that the output quantum state information is more accurate, and the computing accuracy of the quantum computing tasks is improved.

In the present application, the analog-to-digital conversion module 93 acquires and processes the qubit reading feedback signal output by the qubit measurement bus 11 to obtain the first digital signal, then the signal distribution module 92 divides the first digital signal into a plurality of pieces of first data which are in one-to-one correspondence with the qubits 12, and respective acquired data processing modules 91 are enabled by receiving the synchronous trigger signals corresponding to the respective qubits 12 to process the received first data to obtain the quantum state information of the qubits 12, thus realizing the separate processing or on-demand processing of the qubit reading feedback signals output by the plurality of qubits 12 connected with a qubit measurement bus 11, and further realizing that the plurality of qubits 12 connected with the qubit measurement bus 11 execute different quantum computing tasks, which greatly improving the utilization rate of the qubits 12 on the quantum chip 1.

As shown in Fig. 20, as an implementation of the embodiment of the present application, each of the acquired data processing modules 91 includes: an acquisition control unit 911 configured to output a third control signal according to a preset time sequence in response to the synchronous trigger signal; a processing coefficient reading unit 912 connected with the acquisition control unit 911, and configured to output a processing coefficient in response to the third control signal; and a data processing unit 913 connected with the acquisition control unit 911 and the processing coefficient reading unit 912, and configured to process the first data according to the processing coefficient in response to the third control signal, and output the quantum state information of the corresponding qubit 12 obtained by processing.

Specifically, the acquired data processing module 91 is configured to process the received first data based on the synchronous trigger signal; the acquisition control unit 911 is provided in the acquired data processing module 91 to receive the synchronous trigger signal corresponding to the qubit 12, and the acquisition control unit 911 is internally provided with the preset time sequence to send the third control signal according to the preset time sequence in response to the synchronous trigger signal; the data processing unit 913 is configured to connect with the signal distribution module 92 to receive the first data and process the received first data in response to the third control signal. When the first data is processed by the data processing unit 913, the present application further provides the processing coefficient reading unit 912 in the acquired data processing module 91, and a preset processing coefficient is stored in the processing coefficient reading unit 912, wherein the processing coefficient is configured for processing the first data. Therefore, the processing coefficient reading unit 912 also outputs the processing coefficient to the data processing unit 913 in response to the third control signal output by the acquisition control unit 911. The data processing unit 913 processes the first data according to the processing coefficient in response to the third control signal, to quickly obtain the quantum state information corresponding to the first data, and realize the rapid processing and analyzing of the task results obtained after the plurality of qubits 12 connected with the qubit measurement bus 11 execute the quantum computing tasks. Since it is not necessary to calculate the processing coefficient during the measurement, the operation efficiency of the signal acquisition apparatus 9 is improved.

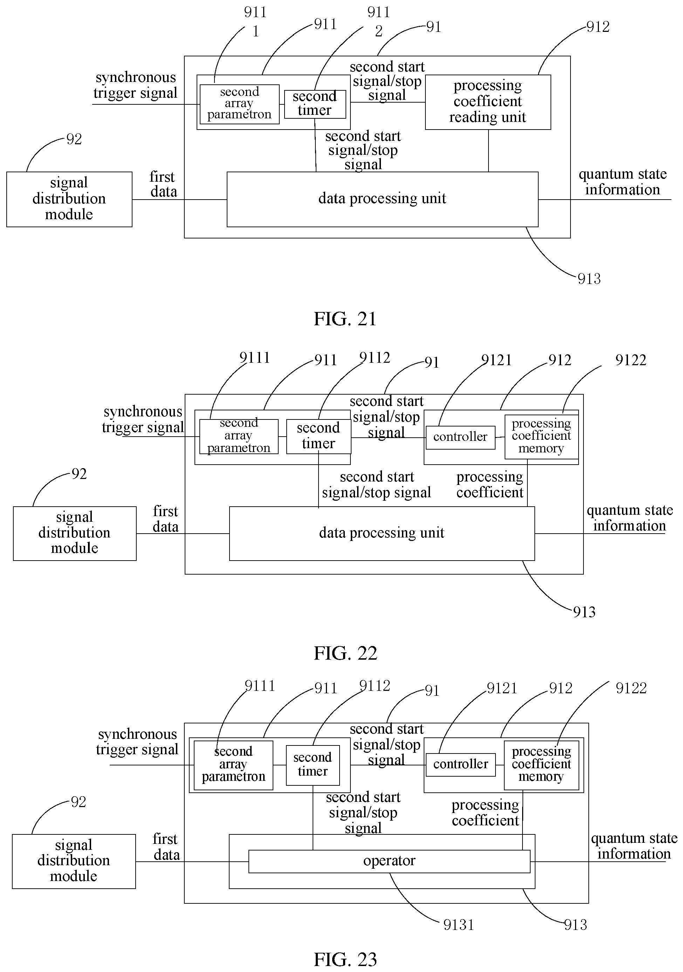

As shown in Fig. 21, as an implementation of the embodiment of the present application, the third control signal includes a second start signal and a second stop signal, and the acquisition control unit 911 includes a second array parametron 9111 configured to output a third time parameter and a fourth time parameter corresponding to the preset time sequence in response to the synchronous trigger signal; and a second timer 9112, connected with the second array parametron 9111, and configured to start timing in response to the synchronous trigger signal until the third time parameter and the fourth time parameter, send the second start signal to the processing coefficient reading unit 912 and the data processing unit 913 in response to the third time parameter, and send the second stop signal to the processing coefficient reading unit 912 and the data processing unit 913 in response to the fourth time parameter.

Specifically, the acquisition control unit 911 is internally composed of one second array parametron 9111 in a first-in first-out queue and one second timer 9112. When receiving the synchronous trigger signal, the second array parametron 9111 outputs the third time parameter TcO1 and the fourth time parameter TcO2 corresponding to the preset time sequence, and the second timer 9112 starts timing. When the time of the second timer 9112 is the same as TcO1, the second start signal is sent to the data processing unit 913 and the processing coefficient reading unit 912; and when the time of the second timer 9112 is the same with TcO2, the second stop signal is sent to the data processing unit 913 and the processing coefficient reading unit 912. At this time, the second array parametron 9111 updates the time parameters to Tc11 and Tc12, and the second timer 9112 starts timing again, to output the next set of third time parameter Tc11 and fourth time parameter Tc12 based on the next synchronous trigger signal and the preset time sequence.

It should be noted that the second timer 9112 simultaneously sends the second start signal to the data processing unit 913 and the processing coefficient reading unit 912, and simultaneously sends the second stop signal to the data processing unit 913 and the processing coefficient reading unit 912. That is, when the timer 9112 sends the second start signal to the processing coefficient reading unit 912, the processing coefficient reading unit 912 outputs the processing coefficient to the data processing unit 913, and at the same time, the data processing unit 913 processes the first data according to the processing coefficient in response to the second start signal. Similarly, when the timer 9112 sends the second stop signal to the processing coefficient reading unit 912, the processing coefficient reading unit 912 will stop outputting the processing coefficient to the data processing unit 913, and at the same time, the data processing unit 913 will output the specific processing result, that is, the quantum state information of each qubit, in response to the second stop signal.

As shown in Fig. 22, as an implementation of the embodiment of the present application, the processing coefficient reading unit 912 includes a processing coefficient memory 9122 configured to store a preset processing coefficient; and a controller 9121 configured to read and output the processing coefficient to the data processing unit 913 in response to the second start signal, and stop reading in response to the second stop signal.

Specifically, the processing coefficient memory 9122 is provided in the processing coefficient reading unit 912 to store the preset processing coefficient, wherein the preset coefficient is stored in the processing coefficient memory 9122 according to an address, each of which corresponds to one processing coefficient. The controller 9121 is configured to sequentially read the processing coefficient starting from the first address in the processing coefficient memory 9122 in response to the second start signal, and output the processing coefficient of the address to the data processing unit 913. The controller 9121 is also configured to stop reading the processing coefficient from the processing coefficient memory 9122 in response to the second stop signal. The preset processing coefficient is read from the processing coefficient memory 9122 by the second start signal and the second stop signal and sent to the data processing unit 913 for calculation, thus improving the working efficiency of the signal acquisition apparatus 9.

As shown in Fig. 23, as an implementation of the embodiment of the present application, the data processing unit 913 includes an operator 9131 which is configured to process the first data according to the processing coefficient in response to the second start signal, and stop operation in response to the second stop signal and output an operation result; wherein the operation result is the quantum state information of the corresponding qubit 12.

Specifically, the operator 9131 is provided in the data processing unit 913, to perform four fundamental operations of arithmetic and logical operations on the first data and processing coefficient in response to the second start signal, and outputs the operation result, i.e. quantum state information, in response to the second stop signal. By using the operator 9131, the processing and analyzing of the first data can be quickly realized, which can effectively improve the operation efficiency of the signal acquisition apparatus 2.

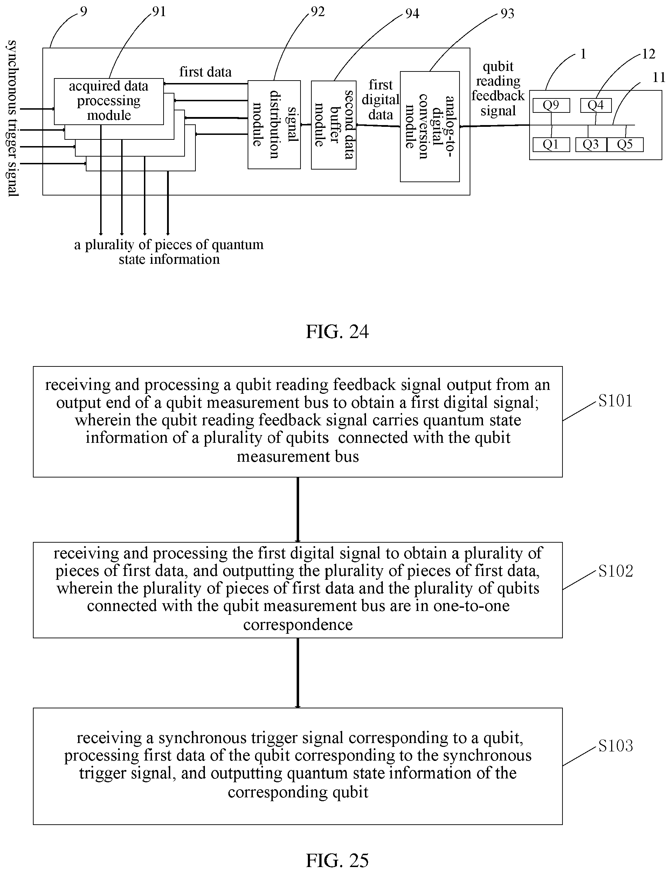

As shown in Fig. 24, as an implementation of the embodiment of the present application, the signal acquisition apparatus 9 further includes a second data buffer module 94, wherein an input end of the second data buffer module 94 is connected with an output end of the analog-to-digital conversion module 93, and an output end of the second data buffer module 94 is connected with the signal distribution module 92; the second data buffer module 94 is configured to receive and store the first digital signal; the signal distribution module 92 is configured to receive from the second data buffer module 94 and process the first digital signal to obtain a plurality of pieces of first data, and output the plurality of pieces of first data.

By configuring the second data buffer module 94 to temporarily store the first digital signal which is then divided and processed by the signal distribution module 92 connected with the output end of the second data buffer module 94, the working efficiency of the signal acquisition apparatus 9 can be effectively improved.

As an implementation of the embodiment of the present application, the analog-to-digital conversion module 93, the signal distribution module 92 and the plurality of acquired data processing modules 91 are located on the same board card. The signal acquisition apparatus 9 of the present application is used in a quantum measurement and control system, which is a device for testing the quantum chip 1. The signal acquisition apparatus 9 of the present application is configured to acquire and process a qubit reading feedback signal which is output by a qubit measurement bus 11 on the quantum chip 1 and carries quantum state information of a plurality of qubits 12, and a plurality of qubit measurement buses 11 are usually integrated on the quantum chip 1 for connecting more qubits 12. Therefore, a plurality of signal acquisition apparatuses 9 of the present application are also needed in the quantum measurement and control system, and each module included in the signal acquisition apparatuses 9 of the present application are integrated and provided on the same board card, and the integration of the signal acquisition apparatuses 9 is realized by adding a board card, which improves the integration of the whole quantum measurement and control system and is suitable for testing the quantum chip 1 with more digits.

As an implementation of the embodiment of the present application, the signal acquisition apparatus 9 further includes a second clock module, which is provided on the board card and configured to provide a clock parameter for the plurality of acquired data processing modules 91. As mentioned above, each of the plurality of acquired data processing modules 91 receives the synchronous trigger signal corresponding to a qubit 12 and the preset time sequence, and processes the first data to obtain the corresponding quantum state information. By providing the clock module on the board card, it is guaranteed that the clock parameter is synchronized among the plurality of acquired data processing modules 91, thereby guaranteeing that the preset time sequence is synchronized among the plurality of acquired data processing modules 91, and improving the fidelity of the qubit reading signal output by the signal acquisition apparatus 9.

As shown in Fig. 25, based on the same application concept, an embodiment of the application also provides a method for processing a qubit reading feedback signal, including:
Step S101: receiving and processing a qubit reading feedback signal output from an output end of a qubit measurement bus 11 to obtain a first digital signal; wherein the qubit reading feedback signal carries quantum state information of a plurality of qubits 12 connected with the qubit measurement bus 11;
Step S102: receiving and processing the first digital signal to obtain a plurality of pieces of first data, and outputting the plurality of pieces of first data, wherein the plurality of pieces of first data and the plurality of qubits 12 connected with the qubit measurement bus 11 are in one-to-one correspondence; and
Step S103: receiving a synchronous trigger signal corresponding to a qubit 12, processing first data of the qubit 12 corresponding to the synchronous trigger signal, and outputting quantum state information of the corresponding qubit 12.

Specifically, a plurality of qubit measurement buses 11 is provided on the quantum chip 1, and each of the qubit measurement buses 11 is connected with a plurality of qubits 12. When the quantum state information of the qubits 12 on one qubit measurement bus 11 needs to be acquired and processed, the qubit reading feedback signal needs to be acquired at the output end 112 of the qubit measurement bus 11. The acquired qubit reading feedback signal carries the quantum state information of the qubits 12. Since working parameters of each qubit 12 and parameters of a quantum computing task run by each qubit 12 are not exactly the same, the quantum state information of each qubit 12 after executing the quantum computing task is not exactly the same, and further the qubit reading feedback signal carries the quantum state information of the plurality of qubits 12. When acquiring and analyzing the qubit reading feedback signal, it is necessary to divide and separately process and analyze the qubit reading feedback signal according to the specific qubit 12, that is, to analyze the qubit reading feedback signal in units of qubit 12.

When the application is specifically implemented, the analog-to-digital conversion module 93 acquires and processes the qubit reading feedback signal output from the output end 112 of the qubit measurement bus 11 to obtain the first digital signal, and then the signal distribution module 92 divides the first digital signal into a plurality of pieces of first data which are in one-to-one correspondence with the qubits 12, and the corresponding acquired data processing module 91 is enabled by receiving the synchronous trigger signal corresponding to the corresponding qubit 12 to process the received first data to obtain the quantum state information of the qubit 12, so that the separate processing or on-demand processing of the qubit reading feedback signal output by the plurality of qubits 12 connected with one qubit measurement bus 11 can be realized, and further the plurality of qubits 12 connected with one qubit measurement bus 11 can run different quantum computing tasks, which greatly improves the utilization rate of the qubits 12 on the quantum chip 1.

Based on the same application concept, an embodiment of the present application also provides a quantum measurement and control system, which includes the above signal acquisition apparatus 9, or is configured for processing a qubit reading feedback signal output by a quantum chip 1 using the above method for processing a qubit reading feedback signal.

Based on the same application concept, an embodiment of the application also provides a quantum computer, which includes the above quantum measurement and control system and the quantum chip 1, wherein the quantum chip 1 is provided with a plurality of qubit measurement buses 11, and each of the qubit measurement buses 11 is connected with a plurality of qubits 12.

Based on the same application concept, an embodiment of the application also provides a computer storage medium having computer programs stored therein, wherein the computer programs, when executed by a processor, cause an implementation of any one of the above method for generating and/or acquiring a qubit reading signal.

An embodiment of the present application also provide a computer program product containing instructions, which, when run on a computer, causes the computer to carry out any one of the above method for generating and/or acquiring a qubit reading signal in the above embodiments.

The system, apparatus, module or unit set forth in the above embodiments can be realized by a computer chip or an entity, or by a product with a certain function. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

In a typical configuration, a computer includes one or more processors (CPU), an input/output interface, a network interface and a memory.

The memory may include a non-permanent memory, a random access memory (RAM) and/or a nonvolatile memory or the like in computer-readable media, such as a read-only memory (ROM) or a flash RAM. The memory is an example of the computer-readable medium.

The computer-readable media, including permanent and non-permanent, removable and non-removable media, can store information by any method or technology. The information can be computer-readable instructions, data structures, modules of programs or other data. Examples of storage media of the computer include, but are not limited to a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, CD-ROM, a digital versatile disc (DVD) or other optical storage, magnetic cassettes, magnetic disk storage, a quantum memory, graphene-based storage media or other magnetic storage devices or any other non-transmission media which can be used to store information that can be accessed by computing devices. According to the definition herein, the computer-readable media does not include temporary computer-readable media, such as modulated data signals and carrier waves.

It should also be noted that the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

Specific embodiments of the specification have been described above. Other embodiments are within the scope of the appended claims. In some cases, the actions or steps recited in the claims may be performed in a different order than in the embodiments and can still achieve the desired results. In addition, the processes depicted in the drawings do not necessarily require the specific order shown or the sequential order to achieve the desired results. In some embodiments, multitasking and parallel processing are also possible or may be advantageous.

The term used in one or more embodiments of the specification is for the purpose of describing specific embodiments only and is not intended to limit one or more embodiments of the specification. The singular forms "a/an", "said" and "the" used in one or more embodiments of the specification and the appended claims are also intended to include the plural forms, unless the context clearly indicates other meaning. It should also be understood that the term "and/or" as used herein refers to and includes any or all possible combinations of one or more associated listed items. It should be understood that although the terms "first", "second", "third", etc. may be used to describe various information in one or more embodiments of the specification, these information should not be limited to these terms. These terms are only used to distinguish the same type of information from each other. For example, without departing from the scope of one or more embodiments of the specification, the first information may also be called the second information, and similarly, the second information may also be called the first information. Depending on the context, the word "if" as used herein can be interpreted as "when" or "while" or "in response to determining". The above is only the preferred embodiments of one or more embodiments of the specification, and is not intended to limit one or more embodiments of the specification.

The above embodiments according to drawings describe the structure, features and effects of the present application in detail. The above is only the preferred embodiments of the present application, and is not intended to limit the scope of the present invention, which is defined by the appended claims.

## Claims

1. A quantum measurement and control system, comprising:
a first signal output module (2), configured to generate waveforms to be processed corresponding to qubits (12) connected with a qubit measurement bus (11) based on a preset time sequence and process the waveforms to be processed into one synthesized waveform, and output a qubit reading signal corresponding to the synthesized waveform to the qubit measurement bus (11); wherein the preset time sequence is determined according to an execution time and a measurement time of a quantum computing task to be executed, a waveform to be processed for a qubit (12) comprises a measurement waveform when the qubit (12) needs to be measured or an empty waveform when the qubit (12) does not need to be measured;
a signal acquisition module (3), configured to acquire and process a qubit reading feedback signal output by the qubit measurement bus (11) based on the preset time sequence, to obtain quantum state information of each qubit (12) which needs to be measured; and
a control module (4), configured to output a synchronous trigger signal as a start time of the preset time sequence to the first signal output module (2) and the signal acquisition module (3); wherein the first signal output module (2) is further configured to update the waveforms to be processed for the qubits (12) according to a first preset time; the first preset time is determined according to a working clock frequency of the first signal output module (2).

2. The quantum measurement and control system according to claim 1, wherein the first signal output module (2) comprises:
a waveform output unit (21), configured to generate the waveforms to be processed corresponding to the qubits (12) connected with the qubit measurement bus (11) based on the preset time sequence and process the waveforms to be processed into the synthesized waveform; and
a DAC unit (22), connected with the waveform output unit (21), and configured to receive the synthesized waveform and output the qubit reading signal corresponding to the synthesized waveform to the qubit measurement bus (11).

3. The quantum measurement and control system according to claim 2, wherein the waveform output unit (21) comprises:
a plurality of waveform generating units (211), any one of which is configured to generate a waveform to be processed for a qubit (12); and
a waveform synthesizing unit (212), connected with the plurality of waveform generating units (211) and configured to process the waveforms to be processed output by the plurality of waveform generating units (211) into the synthesized waveform.

4. The quantum measurement and control system according to claim 3, wherein the plurality of waveform generating units (211) are configured to generate the waveforms to be processed for the qubits (12) connected with the qubit measurement bus (11) based on the preset time sequence and output the waveforms to be processed.

5. The quantum measurement and control system according to claim 2, wherein the DAC unit (22) comprises at least one output channel, any one of which is configured to output one qubit reading signal to one qubit measurement bus (11) on a quantum chip (1).

6. The quantum measurement and control system according to claim 1, wherein the signal acquisition module (3) comprises:
an ADC unit (31), configured to acquire and process the qubit reading feedback signal output by the qubit measurement bus (11) to obtain a first digital signal; wherein the first digital signal carries quantum state information of measured qubits (12) connected with the qubit measurement bus (11); and
a data processing unit (32), connected with the ADC unit (31) and configured to receive and process the first digital signal based on the preset time sequence to obtain the quantum state information of the measured qubits (12).

7. The quantum measurement and control system according to claim 6, wherein the data processing unit (32) comprises:
a data distributor (321), configured to receive and process the first digital signal to obtain a plurality of pieces of first data and output the plurality of pieces of first data; wherein, the plurality of pieces of first data and a plurality of qubits connected with the qubit measurement bus (11) are in one-to-one correspondence; and
a plurality of operators (322), connected with the data distributor (321), wherein each of the plurality of operators (322) is configured to receive and process one of the plurality of pieces of first data and output quantum state information of one measured qubit (12).

8. The quantum measurement and control system according to claim 6, wherein each of the operators (322) is specifically configured to receive and process one of the plurality of pieces of first data based on the preset time sequence, and output the quantum state information of one measured qubit (12).

9. The quantum measurement and control system according to claim 6, wherein the ADC unit (31) comprises at least one acquisition channel, any one of which is configured to acquire a qubit (12) reading feedback signal output by a qubit measurement bus (11).

10. The quantum measurement and control system according to claim 1, wherein the quantum measurement and control system further comprises a task management module (6), which is configured to receive the execution time and measurement time of the quantum computing task to be executed and output the corresponding preset time sequence.

11. The quantum measurement and control system according to claim 1, wherein the quantum measurement and control system further comprises a second signal output module (5), which is configured to output control signals to a plurality of qubits connected with the qubit measurement bus (11) based on the preset time sequence, and wherein the control signals are configured to regulate the quantum state information of the qubits; or
wherein the first signal output module (2) and the signal acquisition module (3) are located on a same board card.

12. The quantum measurement and control system according to claim 1, which is configured for measurement of qubits connected with at least one qubit measurement bus (11) on a quantum chip (1); wherein the measurement of the qubits comprises applying a qubit reading signal to the qubits, and acquiring from the qubits and processing a qubit reading feedback signal after a preset delay; the quantum measurement and control system further comprises:
a qubit measurement determining module (7), configured to determine first information on whether each of the qubits connected with the qubit measurement bus (11) needs to be measured at a current time.

13. The quantum measurement and control system according to claim 12, wherein the qubit measurement determining module (7) comprises:
a quantum computing task receiving module (71), configured to receive a quantum computing task; and
a quantum computing task analyzing module (72), configured to analyze the quantum computing task and determine a task execution time and a measurement time of a qubit; and
a measurement determining module (73), configured to determine the first information on whether each of the qubits connected with the qubit measurement bus (11) needs to be measured at the current time, based on the execution time and the measurement time.

14. A quantum computer comprising a quantum chip (1) and the quantum measurement and control system according to any one of claims 1 to 13;
wherein, the quantum chip (1) is provided with at least one group of qubits, each group of qubits is connected with one qubit measurement bus (11);
an input end of each qubit measurement bus (11) is connected with the first signal output module (2), and an output end (112) of each qubit measurement bus (11) is connected with the signal acquisition module (3).

## Patentansprüche

1. Ein Quantenmessungs- und Steuersystem, umfassend:
ein erstes Signalausgabemodul (2), das so konfiguriert ist, dass es zu verarbeitende Wellenformen erzeugt, die Qubits (12) entsprechen, die mit einem Qubit-Messungsbus (11) verbunden sind, basierend auf einer voreingestellten Zeitsequenz, und die zu verarbeitenden Wellenformen zu einer synthetisierten Wellenform verarbeitet und ein Qubit-Lesesignal, das der synthetisierten Wellenform entspricht, an den Qubit-Messungsbus (11) ausgibt; wobei die voreingestellte Zeitsequenz gemäß einer Ausführungszeit und einer Messzeit einer auszuführenden Quantenberechnungsaufgabe bestimmt wird, eine zu verarbeitende Wellenform für ein Qubit (12) eine Messwellenform umfasst, wenn das Qubit (12) gemessen werden muss, oder eine leere Wellenform, wenn das Qubit (12) nicht gemessen werden muss;
ein Signalerfassungsmodul (3), das so konfiguriert ist, dass es ein Qubit-Leserückkopplungssignal erfasst und verarbeitet, das von dem Qubit-Messungsbus (11) basierend auf der voreingestellten Zeitsequenz ausgegeben wird, um Quantenzustandsinformation jedes Qubits (12) zu erhalten, das gemessen werden muss; und
ein Steuermodul (4), das so konfiguriert ist, dass es ein synchrones Triggersignal als Startzeit der voreingestellten Zeitsequenz an das erste Signalausgabemodul (2) und das Signalerfassungsmodul (3) ausgibt; wobei das erste Signalausgabemodul (2) ferner so konfiguriert ist, dass es die zu verarbeitenden Wellenformen für die Qubits (12) gemäß einer ersten voreingestellten Zeit aktualisiert; die erste voreingestellte Zeit wird gemäß einer Arbeitstaktfrequenz des ersten Signalausgabemoduls (2) bestimmt.

2. Das Quantenmessungs- und Steuersystem nach Anspruch 1, wobei das erste Signalausgabemodul (2) umfasst:
eine Wellenformausgabeeinheit (21), die so konfiguriert ist, dass sie die zu verarbeitenden Wellenformen erzeugt, die den Qubits (12) entsprechen, die mit dem Qubit-Messungsbus (11) verbunden sind, basierend auf der voreingestellten Zeitsequenz, und die zu verarbeitenden Wellenformen zu der synthetisierten Wellenform verarbeitet; und
eine DAC-Einheit (22), die mit der Wellenformausgabeeinheit (21) verbunden ist und so konfiguriert ist, dass sie die synthetisierte Wellenform empfängt und das Qubit-Lesesignal, das der synthetisierten Wellenform entspricht, an den Qubit-Messungsbus (11) ausgibt.

3. Das Quantenmessungs- und Steuersystem nach Anspruch 2, wobei die Wellenformausgabeeinheit (21) umfasst:
eine Vielzahl von Wellenformerzeugungseinheiten (211), von denen jede so konfiguriert ist, dass sie eine zu verarbeitende Wellenform für ein Qubit (12) erzeugt; und
eine Wellenformsynthetisierungseinheit (212), die mit der Vielzahl von Wellenformerzeugungseinheiten (211) verbunden ist und so konfiguriert ist, dass sie die zu verarbeitenden Wellenformen, die von der Vielzahl von Wellenformerzeugungseinheiten (211) ausgegeben werden, zu der synthetisierten Wellenform verarbeitet.

4. Das Quantenmessungs- und Steuersystem nach Anspruch 3, wobei die Vielzahl von Wellenformerzeugungseinheiten (211) so konfiguriert ist, dass sie die zu verarbeitenden Wellenformen für die Qubits (12), die mit dem Qubit-Messungsbus (11) verbunden sind, basierend auf der voreingestellten Zeitsequenz erzeugt und die zu verarbeitenden Wellenformen ausgibt.

5. Das Quantenmessungs- und Steuersystem nach Anspruch 2, wobei die DAC-Einheit (22) mindestens einen Ausgabekanal umfasst, von denen jeder so konfiguriert ist, dass er ein Qubit-Lesesignal an einen Qubit-Messungsbus (11) auf einem Quantenchip (1) ausgibt.

6. Das Quantenmessungs- und Steuersystem nach Anspruch 1, wobei das Signalerfassungsmodul (3) umfasst:
eine ADC-Einheit (31), die so konfiguriert ist, dass sie das Qubit-Leserückkopplungssignal erfasst und verarbeitet, das von dem Qubit-Messungsbus (11) ausgegeben wird, um ein erstes digitales Signal zu erhalten; wobei das erste digitale Signal Quantenzustandsinformation von gemessenen Qubits (12) trägt, die mit dem Qubit-Messungsbus (11) verbunden sind; und
eine Datenverarbeitungseinheit (32), die mit der ADC-Einheit (31) verbunden ist und so konfiguriert ist, dass sie das erste digitale Signal basierend auf der voreingestellten Zeitsequenz empfängt und verarbeitet, um die Quantenzustandsinformation der gemessenen Qubits (12) zu erhalten.

7. Das Quantenmessungs- und Steuersystem nach Anspruch 6, wobei die Datenverarbeitungseinheit (32) umfasst:
einen Datenverteiler (321), der so konfiguriert ist, dass er das erste digitale Signal empfängt und verarbeitet, um eine Vielzahl von Teilen von ersten Daten zu erhalten und die Vielzahl von Teilen von ersten Daten auszugeben; wobei die Vielzahl von Teilen von ersten Daten und eine Vielzahl von Qubits, die mit dem Qubit-Messungsbus (11) verbunden sind, in einer Eins-zu-Eins-Entsprechung stehen; und
eine Vielzahl von Operatoren (322), die mit dem Datenverteiler (321) verbunden sind, wobei jeder der Vielzahl von Operatoren (322) so konfiguriert ist, dass er einen der Vielzahl von Teilen von ersten Daten empfängt und verarbeitet und Quantenzustandsinformation eines gemessenen Qubits (12) ausgibt.

8. Das Quantenmessungs- und Steuersystem nach Anspruch 6, wobei jeder der Operatoren (322) speziell so konfiguriert ist, dass er einen der Vielzahl von Teilen von ersten Daten basierend auf der voreingestellten Zeitsequenz empfängt und verarbeitet und die Quantenzustandsinformation eines gemessenen Qubits (12) ausgibt.

9. Das Quantenmessungs- und Steuersystem nach Anspruch 6, wobei die ADC-Einheit (31) mindestens einen Erfassungskanal umfasst, von denen jeder so konfiguriert ist, dass er ein Qubit (12)-Leserückkopplungssignal erfasst, das von einem Qubit-Messungsbus (11) ausgegeben wird.

10. Das Quantenmessungs- und Steuersystem nach Anspruch 1, wobei das Quantenmessungs- und Steuersystem ferner ein Aufgabenverwaltungsmodul (6) umfasst, das so konfiguriert ist, dass es die Ausführungszeit und die Messzeit der auszuführenden Quantenberechnungsaufgabe empfängt und die entsprechende voreingestellte Zeitsequenz ausgibt.

11. Das Quantenmessungs- und Steuersystem nach Anspruch 1, wobei das Quantenmessungs- und Steuersystem ferner ein zweites Signalausgabemodul (5) umfasst, das so konfiguriert ist, dass es Steuersignale an eine Vielzahl von Qubits ausgibt, die mit dem Qubit-Messungsbus (11) verbunden sind, basierend auf der voreingestellten Zeitsequenz, und wobei die Steuersignale so konfiguriert sind, dass sie die Quantenzustandsinformation der Qubits regulieren; oder
wobei sich das erste Signalausgabemodul (2) und das Signalerfassungsmodul (3) auf einer gleichen Platinenkarte befinden.

12. Das Quantenmessungs- und Steuersystem nach Anspruch 1, das zur Messung von Qubits konfiguriert ist, die mit mindestens einem Qubit-Messungsbus (11) auf einem Quantenchip (1) verbunden sind; wobei die Messung der Qubits das Anlegen eines Qubit-Lesesignals an die Qubits und das Erfassen eines Qubit-Leserückkopplungssignals von den Qubits und das Verarbeiten eines Qubit-Leserückkopplungssignals nach einer voreingestellten Verzögerung umfasst; wobei das Quantenmessungs- und Steuersystem ferner umfasst:
ein Qubit-Messungsbestimmungsmodul (7), das so konfiguriert ist, dass es erste Information darüber bestimmt, ob jedes der Qubits, die mit dem Qubit-Messungsbus (11) verbunden sind, zu einer aktuellen Zeit gemessen werden muss.

13. Das Quantenmessungs- und Steuersystem nach Anspruch 12, wobei das Qubit-Messungsbestimmungsmodul (7) umfasst:
ein Quantenberechnungsaufgaben-Empfangsmodul (71), das so konfiguriert ist, dass es eine Quantenberechnungsaufgabe empfängt; und
ein Quantenberechnungsaufgaben-Analysemodul (72), das so konfiguriert ist, dass es die Quantenberechnungsaufgabe analysiert und eine Aufgabenausführungszeit und eine Messzeit eines Qubits bestimmt; und
ein Messungsbestimmungsmodul (73), das so konfiguriert ist, dass es die erste Information darüber bestimmt, ob jedes der Qubits, die mit dem Qubit-Messungsbus (11) verbunden sind, zu der aktuellen Zeit gemessen werden muss, basierend auf der Ausführungszeit und der Messzeit.

14. Ein Quantencomputer, umfassend einen Quantenchip (1) und das Quantenmessungs- und Steuersystem nach einem der Ansprüche 1 bis 13;
wobei der Quantenchip (1) mit mindestens einer Gruppe von Qubits bereitgestellt wird, wobei jede Gruppe von Qubits mit einem Qubit-Messungsbus (11) verbunden ist;
ein Eingangsende jedes Qubit-Messungsbusses (11) mit dem ersten Signalausgabemodul (2) verbunden ist und ein Ausgangsende (112) jedes Qubit-Messungsbusses (11) mit dem Signalerfassungsmodul (3) verbunden ist.

## Revendications

1. Un système de mesure et de contrôle quantique, comprenant:
un premier module de délivrance de signal (2), configuré pour générer des formes d'onde à traiter correspondant à des qubits (12) connectés à un bus de mesure de qubits (11) sur la base d'une séquence temporelle prédéfinie, et pour traiter les formes d'onde à traiter en une forme d'onde unique synthétisée, et délivrer au bus de mesure de qubits (11) un signal de lecture de qubit correspondant à la forme d'onde synthétisée ; dans lequel la séquence temporelle prédéfinie est déterminée en fonction d'un temps d'exécution et d'un temps de mesure d'une tâche de calcul quantique à exécuter, une forme d'onde à traiter pour un qubit (12) comprend une forme d'onde de mesure lorsque le qubit (12) a besoin d'être mesuré, ou une forme d'onde vide lorsque le qubit (12) n'a pas besoin d'être mesuré;
un module d'acquisition de signal (3), configuré pour acquérir et traiter un signal de retour de lecture de qubit délivré par le bus de mesure de qubits (11) sur la base de la séquence temporelle prédéfinie, pour obtenir une information d'état quantique de chaque qubit (12) qui a besoin d'être mesuré; et
un module de contrôle (4), configuré pour délivrer au premier module de délivrance de signal (2) et au module d'acquisition de signal (3) un signal déclencheur synchrone en tant qu'instant de début de la séquence temporelle prédéfinie ; dans lequel le premier module de délivrance de signal (2) est en outre configuré pour mettre à jour les formes d'onde à traiter pour les qubits (12) en fonction d'un premier temps prédéfini, le premier temps prédéfini étant déterminé en fonction d'une fréquence d'horloge de travail du premier module de délivrance de signal (2).

2. Le système de mesure et de contrôle quantique selon la revendication 1, dans lequel le premier module de délivrance de signal (2) comprend:
une unité de délivrance de formes d'onde (21), configurée pour générer les formes d'onde à traiter correspondant aux qubits (12) connectés au bus de mesure de qubits (11) sur la base de la séquence temporelle prédéfinie, et pour traiter les formes d'onde à traiter pour donner la forme d'onde synthétisée; et
une unité DAC (22) connectée à l'unité de délivrance de formes d'onde (21), et configurée pour recevoir la forme d'onde synthétisée et délivrer au bus de mesure de qubits (11) le signal de lecture de qubit correspondant à la forme d'onde synthétisée.

3. Le système de mesure et de contrôle quantique selon la revendication 2, dans lequel l'unité de délivrance de formes d'onde (21) comprend:
une pluralité d'unités de génération de formes d'onde (211), dont chacune est configurée pour générer une forme d'onde à traiter pour un qubit (12); et
une unité de synthèse de forme d'onde (212), connectée à la pluralité d'unités de génération de formes d'onde (211) et configurée pour traiter les formes d'onde à traiter délivrées par la pluralité d'unités de génération de forme d'onde (211) pour donner la forme d'onde synthétisée.

4. Le système de mesure et de contrôle quantique selon la revendication 3, dans lequel la pluralité d'unités de génération de formes d'onde (211) sont configurées pour générer des formes d'onde à traiter pour les qubits (12) connectées au bus de mesure de qubits (11) sur la base de la séquence temporelle prédéfinie, et délivrer les formes d'onde à traiter.

5. Le système de mesure et de contrôle quantique selon la revendication 2, dans lequel l'unité DAC (22) comprend au moins un canal de sortie, dont chacun est configuré pour délivrer un signal de lecture de qubit à un bus de mesure d'un unique qubit (11) sur une puce quantique (1).

6. Le système de mesure et de contrôle quantique selon la revendication 1, dans lequel le module d'acquisition de signal (3) comprend:
une unité ADC (31), configurée pour acquérir et traiter le signal de retour de lecture de qubit délivré par le bus de mesure de qubits (11) pour obtenir un premier signal numérique ; dans lequel le premier signal numérique véhicule des informations d'état quantique de qubits mesurés (12) connectés au bus de mesure de qubits (11); et
une unité de traitement de données (32), connectée à l'unité ADC (31) et configurée pour recevoir et traiter le premier signal numérique sur la base de la séquence temporelle prédéfinie pour obtenir l'information d'état quantique des qubits mesurés (12).

7. Le système de mesure et de contrôle quantique selon la revendication 6, dans lequel l'unité de traitement de données (32) comprend:
un distributeur de données (321), configuré pour recevoir et traiter le premier signal numérique pour obtenir une pluralité de parties de premières données et délivrer la pluralité de parties de premières données; dans lequel la pluralité de parties de premières données et une pluralité de qubits connectés au bus de mesure de qubits (11) sont en correspondance biunivoque; et
une pluralité d'opérateurs (322), connectés au distributeur de données (321), chacun de la pluralité d'opérateurs (322) étant configuré pour recevoir et traiter l'une de la pluralité de parties de premières données et délivrer une information d'état quantique d'un qubit unique mesuré (12).

8. Le système de mesure et de contrôle quantique selon la revendication 6, dans lequel chacun des opérateurs (322) est spécifiquement configuré pour recevoir et traiter l'une de la pluralité de parties de premières données sur la base de la séquence temporelle prédéfinie, et délivrer l'information d'état quantique d'un qubit unique mesuré (12).

9. Le système de mesure et de contrôle quantique selon la revendication 6, dans lequel l'unité ADC (31) comprend au moins un canal d'acquisition, dont chacun est configuré pour acquérir un signal (2) de retour de lecture de qubit (12) délivré par un bus de mesure de qubits (11).

10. Le système de mesure et de contrôle quantique selon la revendication 1, dans lequel le système de mesure et de contrôle quantique comprend en outre un module de gestion de tâches (6), qui est configuré pour recevoir le temps d'exécution et le temps de mesure de la tâche de calcul quantique à exécuter et délivrer la séquence temporelle prédéfinie correspondante.

11. Le système de mesure et de contrôle quantique selon la revendication 1, dans lequel le système de mesure et de contrôle quantique comprend en outre un second module de délivrance de signal (5), qui est configuré pour délivrer des signaux de contrôle à une pluralité de qubits connectés au bus de mesure de qubits (11) sur la base de la séquence temporelle prédéfinie, et dans lequel les signaux de contrôle sont configurés pour réguler l'information d'état quantique des qubits; ou
dans lequel le premier module de délivrance de signal (2) et le module d'acquisition de signal (3) sont situés sur une même carte de circuit.

12. Le système de mesure et de contrôle quantique selon la revendication 1, qui est configuré pour la mesure de qubits connectés à au moins un bus de mesure de qubits (11) sur une puce quantique (1); dans lequel la mesure des qubits comprend l'application aux qubits d'un signal de lecture de qubit, et l'acquisition depuis les qubits et le traitement d'un signal de retour de lecture de qubit après un retard prédéfini; le système de mesure et de contrôle quantique comprenant en outre:
un module de détermination de mesure de qubit (7), configuré pour déterminer une première information sur le fait que chacun des qubits connectés au bus de mesure de qubits (11) a ou non besoin d'être mesuré à un instant courant.

13. Le système de mesure et de contrôle quantique selon la revendication 12, dans lequel le module de détermination de mesure de qubit (7) comprend:
un module de réception de tâche de calcul quantique (71), configuré pour recevoir une tâche de calcul quantique; et
un module d'analyse de tâche de calcul quantique (72), configuré pour analyser la tâche de calcul quantique et déterminer un temps d'exécution de tâche et un temps de mesure d'un qubit; et
un module de détermination de mesure (73), configuré pour déterminer la première information sur le fait que chacun des qubits connectés au bus de mesure de qubits (11) a ou non besoin d'être mesuré à un instant courant, sur la base du temps d'exécution et du temps de mesure.

14. Un calculateur quantique comprenant une puce quantique (1) et le système de esure et de contrôle quantique selon l'une des revendications 1 à 13,
dans lequel la puce quantique (1) dispose d'au moins un groupe de qubits, chaque groupe de qubits étant connecté à un unique bus de mesure de qubits (11);
une extrémité d'entrée de chaque bus de mesure de qubits est connectée au premier module de délivrance de signal (2), et une extrémité de sortie (112) de chaque bus de mesure de qubits (11) est connectée au module d'acquisition de signal (3).
